(19) Europäisches Patentamt
European Patent Office
Office européen des brevets

(11) EP 1 134 234 A1

(12) **EUROPEAN PATENT APPLICATION**

(43) Date of publication:
**19.09.2001 Bulletin 2001/38**

(51) Int Cl.[7]: **C08F 4/646**, C08F 10/00

(21) Application number: **01105363.4**

(22) Date of filing: **08.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.03.2000 JP 2000066904**

(71) Applicant: **Sumitomo Chemical Company, Limited**
**Chuo-ku Osaka 541-8550 (JP)**

(72) Inventor: **Watanabe, Tsuyoshi**
**Ichihara-shi, Chiba (JP)**

(74) Representative: **VOSSIUS & PARTNER**
**Siebertstrasse 4**
**81675 München (DE)**

Remarks:
A request for correction of the description and claims has been filed pursuant to Rule 88 EPC. A decision on the request will be taken during the proceedings before the Examining Division (Guidelines for Examination in the EPO, A-V, 3.).

(54) **Olefin polymerization catalyst and process for producing olefin polymer**

(57) An olefin polymerization catalyst prepared by a process comprises contacting (A)a transition metal compound in which the number of a transition metal is the same as that of group having a cyclopentadiene type anion skeleton, in its molecule, (C)a modified aluminumoxy compound obtained by reacting an aluminumoxy compound with a boron compound represented by the general formula $BQ^1Q^2Q^3$, wherein $Q^1$ , $Q^2$ and $Q^3$ are respectively a halogen atom, a hydrocarbon group, a halogenated hydrocarbon group, a substituted ailyl group, an alkoxy group or a di-substituted amino group and optionally (B) a specified organoaluminum compound, and a process for producing an olefin polymer using the catalyst.

EP 1 134 234 A1

## Description

The present invention relates to an olefin polymerization catalyst prepared by using a modified aluminumoxy compound as one component, and a process for producing an olefin polymer with said catalyst.

Many processes for producing an olefin polymer using a metallocene complex have been already reported. For example, a process for producing an olefin polymer, using a metallocene complex and an aluminoxane is reported in JP58-19306A. However, this process using bis( $\eta^5$-cyclopentadienyl)zirconium dichloride and methylaluminoxane provided olefin polymers of low molecular weight.

Though many proposals relating to modification of an aluminum oxy compound have been reported in order to solve these problems, there have been few proposals relating to a method for increasing the molecular weight of olefin polymers.

For example, JP-A-02-172991 discloses a benzene-insoluble aluminumoxy compound prepared by reacting an aluminoxane with water. Further, JP-A-07-70145 discloses an aluminumoxy compound obtained by reacting an aluminoxane with a catecol borane. The increase of the molecular weight of the olefin polymer according to these methods has not been completed.

Though an olefin polymerization process using zirconocene and an aluminum oxy compound having an electron withdrawing group such as a pentafluorophenoxy group or the like is disclosed in JP-A-06-329714, the molecular weight of the olefin polymers obtained is not necessarily sufficient. Therefore, the more increase of the molecular weight has been required.

Though Choong Hoon Lee et al. in Journal of Molecular Catalysis A: Chemical 132(1998)231-239, reported with respect to olefin polymerization using a reaction product of methylaluminoxane and trispentafluorephenylborane, and bis(cyclopentadienyl)zirconium dichloride, the molecular weight of the olefin polymer was not mentioned.

As a method for increasing a molecular weight of a olefin polymer, thought JP-A-64-045406 discloses an olefin polymerization method which uses bis(cyclopentadienyl)zirconium dichloride, methylaluminoxane and tetraethoxysilane, the molecular weight of thus obtained olefin polymer was insufficient from the industrial view point. Particularly, when copolymerization of ethylene with 1-hexene is carried out at high temperature, the molecular weight of thus obtained copolymer was very low.

Further, JP-A-09-087313 discloses a process for producing a copolymer of ethylene with 1-hexene using dimethylsilylene(tetramethylcyclopentadienyl) (3-tert-butyl-5-methyl-2-phenoxy)titanium dichloride, triisobutylaluminum and N,N-dimethylaniliniumtetrakis (pentafluorophenyl)borate. Though a copolymer of comparatively high molecular weight is obtained with a high activity by using them, further increase of the molecular weight has been desired .

An object of the present invention is to provide an olefin polymerization catalyst giving an olefin polymer of higher molecular weight and a process for producing an olefin polymer having a high molecular weight using said catalyst.

This object could be achieved by the provision of a specific olefin polymerization catalyst prepared by using a modified aluminumoxy compound obtained by pre-reacting an aluminumoxy compound with a specific boron compound, and by a process for producing an olefin polymer by polymerizing an olefin with said olefin polymerization catalyst.

That is, the present invention relates to an olefin polymerization catalyst prepared by contacting (A) with (B) described below, or (A), (B) and (C) described below, and further to a process for producing an olefin polymer which comprises polymerizing an olefin with said catalyst:

(A) a transition metal compound in which the number of a transition metal is the same as that of groups having a cyclopentadiene type anion skeleton, in its molecule.

(B) at least one aluminum compound selected from the following (B1) to (B3);

(B1) an organoaluminum compound represented by the general formula $E^1{}_aAlZ_{3-a}$,

(B2) a cyclic aluminoxane having a structure represented by the general formula $\{-Al(E^2)-O-\}_b$, and

(B3) a linear aluminoxane having a structure represented by the general formula $E^3\{-Al(E^3)-O-\}_cAlE^3{}_2$ (wherein $E^1$, $E^2$ and $E^3$ respectively represent a hydrocarbon group, all of $E^1$, $E^2$ and $E^3$ may be the same or different, Z represents a hydrogen atom or a halogen atom, and all of Z may be the same or different, a represents a numeral satisfying $0<a\leqq 3$, b represents an integer of not less than 2, and c represents an integer of not less than 1); and

(C) a modified aluminumoxy compound obtained by reacting

(c1) an aluminumoxy compound with a boron compound represented by the general formula $BQ^1Q^2Q^3$ (wherein B is a boron atom in the trivalent valence state; and $Q^1$, $Q^2$ and $Q^3$ are respectively a halogen atom, a hydrocarbon group, a halogenated hydrocarbon group, a substituted silyl group, an alkoxy group or a di-substituted amino group

which may be the same or different).

Fig. 1 shows a flow chart for assisting the understanding of the present invention. The flow chart is a typical example of the mode of operation of the present invention, but the present invention is not limited thereto.
The present invention is further illustrated in detail below.

(A)Transition metal compound:

The transition metal compound is a transition metal compound in which the number of a transition metal of the Group IV of the Periodic Table of the Elements is the same as that of a group having a cyclopentadiene type anion skeleton, in its molecule, and for example, a transition metal compound having one transition metal of the Group IV and one group having a cyclopentadiene type anion skeleton, and a μ-oxo type dimmer thereof.
Herein, the transition metal atom of the Group IV represents a transition metal atom of the Group IV of the Periodic Table of the Elements (Revised edition of IUPAC Inorganic Chemistry Nomenclature 1989), and examples thereof include a titanium atom, a zirconium atom and a hafnium atom. A titanium atom or a zirconium atom is preferable.
The transition metal compound used in the present invention is preferably a transition metal compound represented by the general formula (I) or (II):

$$CpMX^1_3 \qquad (I)$$

$$(CPMX^1_m)_2X^2_{3-m} \qquad (II)$$

(wherein M represents a transition metal atom of the Group IV of the Periodic Table of the Elements; Cp represents a group having a cyclopentadiene type anion skeleton; each of $X^1$ represents a hydrogen atom, a halogen atom, an alkyl group, an aralkyl group, an aryl group, a substituted silyl group, an alkoxy group, an aralkyloxy group, an aryloxy group, a di-substituted amino group, an alkylthio group, an aralkylthio group, an arylthio group, an alkylseleno group, an aralkylseleno group or arylseleno group; $X^2$ represents an atom of Group XVI of the Periodic Table of the Elements; m is 1 or 2; and a plurality of respective Cp, M, $X^1$ and $X^2$ may be the same or different and Cp and $X^1$ may be bonded to each other directly through a bridging group.)
M is the same transition metal atom of the Group IV of the Periodic Table of the Elements as described above.
Further, examples of the group having a cyclopentadiene type anion skeleton represented as the substituent group, Cp, include an $\eta^5$-(substituted)cyclopentadienyl group, an $\eta^5$-(substituted)indenyl group and an $\eta^5$-(substituted) fluorenyl group. Specific examples include an $\eta^5$-cyclopentadienyl group, an $\eta^5$-methylcyclopentadienyl group, an $\eta^5$-dimethylcyclopentadienyl group, an $\eta^5$-trimethylcyclopentadienyl group, an $\eta^5$-tetramethylcyclopentadienyl group, an $\eta^5$-pentamethylcyclopentadienyl group, an $\eta^5$-ethylcyclopentadienyl group, an $\eta^5$-n-propylcyclopentadienyl group, an $\eta^5$-isopropylcyclopentadienyl group, an $\eta^5$-n-butylcyclopentadienyl group, an $\eta^5$-sec-butylcyclopentadienyl group, an $\eta^5$-tert-butylcyclopentadienyl group, an $\eta^5$-phenylcyclopentadienyl group, an $\eta^5$-trimethylsilylcyclopentadienyl group, an $\eta^5$-tert-butyldimethylsilylcyclopentadienyl group, an $\eta^5$-indenyl group, an $\eta^5$-methylindenyl group, an η 5-dimethylindenyl group, an $\eta^5$-n-propylindenyl group, an $\eta^5$-isopropylindenyl group, an $\eta^5$-n-butylindenyl group, an $\eta^5$-tert-butylindenyl group, an $\eta^5$-phenylindenyl group, an $\eta^5$-methylphenylindenyl group, an $\eta^5$-naphthylindenyl group, an $\eta^5$-trimethylsilylindenyl group, an $\eta^5$-tetrahydroindenyl group, an $\eta^5$-fluorenyl group, an $\eta^5$-methylfluorenyl group, an $\eta^5$-dimethylfluorenyl group, an $\eta^5$-tert-butylfluorenyl group, an η 5-di-tert-butylfluorenyl group, an $\eta^5$-phenylfluorenyl group, an $\eta^5$-diphenylfluorenyl group, an $\eta^5$-trimethylsilylfluorenyl group and an $\eta^5$-bis-trimethylsilylfluorenyl group. An $\eta^5$-cyclopentadienyl group, an $\eta^5$-methylcyclopentadienyl group, an $\eta^5$-n-butylcyclopentadienyl group, an $\eta^5$-tert-butylcyclopentadienyl group, an $\eta^5$-tetramethylcyclopentadienyl group, an $\eta^5$-indenyl group, an $\eta^5$-tetrahydroindenyl group or an $\eta^5$-fluorenyl group is preferable.
As the halogen atom in the substituent, $X^1$, a fluorine atom, a chlorine atom, a bromine atom and an iodine atom are illustrated. A chlorine atom or a bromine atom is preferable and a chlorine atom is more preferable.
As the alkyl group in the substituent, $X^1$, an alkyl group having 1 to 20 carbon atoms is preferred, and examples include a methyl group, an ethyl group, a n-propyl group, an isopropyl group, a n-butyl group, a sec-butyl group, a tert-butyl group, an isobutyl group, a n-pentyl group, a neopentyl group, a sec-amyl group, a n-hexyl group, an-octyl group, a n-decyl group, a n-dodecyl group, a n-pentadecyl group and a n-eicosyl group, and a methyl group, an ethyl group, an isopropyl group, a tert-butyl group or an isobutyl group or a sec-amyl group is more preferable.
All of these alkyl groups may be substituted with a halogen atom such as a fluorine atom, a chlorine atom, a bromine atom or an iodine atom. Examples of the alkyl group having 1 to 10 carbon atoms which is substituted with

the halogen atom, include a fluoromethyl group, a trifluoromethyl group, a chloromethyl group, a trichloromethyl group, a fluoroethyl group, a pentafluoroethyl group, a perfluoropropyl group, a perfluorobutyl group, a perfluorohexyl group, a perfluorooctyl group, a perchloropropyl group, a perchlorobutyl group and a perbromopropyl group.

Further, all of these alkyl groups may be partially substituted with an alkoxy group such as a methoxy group and an ethoxy group, an aryloxy group such as a phenoxy group or an aralkyloxy group such as a benzyloxy group,

As the aralkyl group in the substituent, $X^1$, an aralkyl group having 7 to 20 carbon atoms is preferable, and examples thereof include a benzyl group, a (2-methylphenyl)methyl group, a (3-methylphenyl)methyl group, a (4-methylphenyl)methyl group, a (2,3-dimethylphenyl)methyl group, a (2,4-dimethylphenyl)methyl group, a (2,5-dimethylphenyl)methyl group, a (2,6-dimethylphenyl)methyl group, a (3,4-dimethylphenyl)methyl group, a (3,5-dimethylphenyl)methyl group, a (2,3,4-timethylphenyl)methyl group, a (2,3,5-timethylphenyl)methyl group, a (2,3,6-timethylphenyl)methyl group, a (3,4,5-timethylphenyl)methyl group, a (2,4,6-timethylphenyl)methyl group, a (2,3,4,5-tetramethylphenyl)methyl group, a (2,3,4,6-tetramethylphenyl)methyl group, a (2,3,5,6-tetramethylphenyl)methyl group, a (pentamethylphenyl)methyl group, an (ethylphenyl)methyl group, a (n-propylphenyl)methyl group, an (isopropylphenyl)methyl group, a (n-butylphenyl)methyl group, a (sec-butylphenyl)methyl group, a (tert-butylphenyl)methyl group, a (n-pentylphenyl) methyl group, a (neopentylphenyl)methyl group, a (n-hexylphenyl)methyl group, a (n-octylphenyl)methyl group, a (n-decylphenyl)methyl group, a (n-dodecylphenyl)methyl group, a naphthylmethyl and an anthracenylmethyl group, and a benzyl group is more preferable.

All of these aralkyl groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

As the aryl group in the substituent, $X^1$, an aryl group having 6 to 20 carbon atoms is preferable, and examples thereof include a phenyl group, a 2-tolyl group, a 3-tolyl group, a 4-tolyl group, a 2,3-xylyl group, a 2,4-xylyl group, a 2,5-xylyl group, a 2,6-xylyl group, a 3,4-xylyl group, a 3,5-xylyl group, a 2,3,4-trimethylphenyl group, a 2,3,5-trimethylphenyl group, a 2,3,6-trimethylphenyl group, a 2,4,6-trimethylphenyl group, a 3,4,5-trimethylphenyl group, a 2,3,4,5-tetramethylphenyl group, a 2,3,4,6-tetramethylphenyl group, a 2,3,5,6-tetramethylphenyl group, a pentamethylphenyl group, an ethylphenyl group, a n-propylphenyl group, an isopropylphenyl group, a n-butylphenyl group, a sec-butylphenyl group, a tert-butylphenyl group, a n-pentylphenyl group, a neopentylphenyl group, a n-hexylphenyl group, a n-octylphenyl group, a n-decylphenyl group, a n-dodecylphenyl group, a n-tetradecylphenyl group, a naphthyl group and an anthracenyl group, and a phenyl group is more preferable.

All of these aryl groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

The substituted silyl group in the substituent, $X^1$, is a silyl group substituted with a hydrocarbon group, and examples of the hydrocarbon group include alkyl groups having 1 to 10 carbon atoms such as a methyl group, an ethyl group, a n-propyl group, an isopropyl group, a n-butyl group, a sec-butyl group, a tert-butyl group, an isobutyl group, a n-pentyl group, a n-hexyl group and a cyclohexyl group, and aryl groups having up to 10 carbon atoms such as a phenyl group. Examples of such substituted silyl group having 1 to 20 carbon atoms include mono-substituted silyl groups having 1 to 20 carbon atoms such as a methylsilyl group, an ethylsilyl group and a phenylsilyl group; di-substituted silyl groups having 2 to 20 carbon atoms such as a dimethylsilyl group, a diethylsilyl group and a diphenylsilyl group; and tri-substituted silyl groups having 3 to 20 carbon atoms such as a trimethylsilyl group, a triethylsilyl group, a tri-n-propylsilyl group, a triisopropylsilyl group, a tri-n-butylsilyl group, a tri-sec-butylsilyl group, a tri-tert-butylsilyl group, a tri-isobutylsilyl group, a tert-butyl-dimethylsilyl group, a tri-n-pentylsilyl group, a tri-n-hexylsilyl group, a tricyclohexylsilyl group and a triphenylsilyl group,and a trimethylsilyl group, a tert-butyldimethylsilyl group or a triphenylsilyl group is preferable.

All of the hydrocarbon groups of these substituted silyl groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

As the alkoxy group in the substituent, $X^1$, an alkoxy group having 1 to 20 carbon atoms is preferable, and examples thereof include a methoxy group, an ethoxy group, a n-propoxy group, an isopropoxy group, a n-butoxy group, a sec-butoxy group, a tert-butoxy group, a n-pentoxy group, a neopentoxy group, an-hexoxygroup, an-octoxy group, an-dodecoxy group, a n-pentadecoxy group and a n-eicosoxy group and, a methoxy group, an ethoxy group, an isopropoxy group or a tert-butoxy group is preferable.

All of these alkoxy groups may be partially substituted with a halogen atom such as a fluorine atom, a chlorine atom, a bromine atom or an iodine atom, an alkoxy group such as a methoxy group and an ethoxy group, an aryloxy group such as a phenoxy group, or an aralkyloxy group such as a benzyloxy group.

As the aralkyloxy group in the substituent, $X^1$, an aralkyloxy group having 7 to 20 carbon atoms is preferable, and examples thereof include a benzyloxy group, a (2-methylphenyl)methoxy group, a (3-methylphenyl)methoxy group,

a (4-methylphenyl)methoxy group, a (2,3-dimethylphenyl)methoxy group, a (2,4-dimethylphenyl)methoxy group, a (2,5-dimethylphenyl)methoxy group, a (2,6-dimethylphenyl)methoxy group, a (3,4-dimethylphenyl)methoxy group, a (3,5-dimethylphenyl)methoxy group, a (2,3,4-trimethylphenyl)methoxy group, a (2,3,5-trimethylphenyl)methoxy group, a (2,3,6-trimethylphenyl)methoxy group, a (2,4,5-trimethylphenyl)methoxy group, a (2,4,6-trimethylphenyl)methoxy group, a (3,4,5-trimethylphenyl)methoxy group, a (2,3,4,5-tetramethylphenyl)methoxy group, a (2,3,4,6-tetramethylphenyl)methoxy group, a (2,3,5,6-tetramethylphenyl)methoxy group, a (pentamethylphenyl)methoxy group, an (ethylphenyl)methoxy group, a (n-propylphenyl)methoxy group, an (isopropylphenyl)methoxy group, (n-butylphenyl)methoxy group, a (sec-butylphenyl)methoxy group, a (tert-butylphenyl)methoxy group, a (n-hexylphenyl)methoxy group, a (n-octylphenyl)methoxy group, a (n-decylphenyl)methoxy group, a naphthylmethoxygroup and an anthracenylmethoxy group,and a benzyloxy group is more preferable.

All of these aralkyloxy groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

As the aryloxy group in the substituent $X^1$,an aryloxy group having 6 to 20 carbon atoms is preferable, and examples thereof include a phenoxy group, a 2-methylphenoxy group, a 3-methylphenoxy group, a 4-methylphenoxy group, a 2,3-dimethylphenoxy group, a 2,4-dimethylphenoxy group, a 2,5-dimethylphenoxy group, a 2,6-dimethylphenoxy group, a 3,4-dimethylphenoxy group, a 3,5-dimethylphenoxy group, a 2-tert-butyl-3-methylphenoxy group, a 2-tert-butyl-4-methylphenoxy group, a 2-tert-butyl-5-methylphenoxy group, a 2-tert-butyl-6-methylphenoxy group, a 2,3,4-trimethylphenoxy group, a 2,3,5-trimethylphenoxy group, a 2,3,6-trimethylphenoxy group, a 2,4,5-trimethylphenoxy group, a 2,4,6-trimethylphenoxy group, a 2-tert-butyl-3,4-dimethylphenoxy group, a 2-tert-butyl-3,5-dimethylphenoxy group, a 2-tert-butyl-3,6-dimethylphenoxy group, a 2,6-di-tert-butyl-3-methylphenoxy group, a 2-tert-butyl-4,5-dimethylphenoxy group, a 2,6-di-tert-butyl-4-methylphenoxy group, a 3,4,5-trimethylphenoxy group, a 2,3,4,5-tetramethylphenoxy group, a 2-tert-butyl-3,4,5-trimethylphenoxy group, a 2,3,4,6-tetramethylphenoxy group, a 2-tert-butyl-3,4,6-trimethylphenoxy group, a 2,6-di-tert-butyl-3,4-dimethylphenoxy group, a 2,3,5,6-tetramethylphenoxy group, a 2-tert-butyl-3,5,6-trimethylphenoxy group, a 2,6-di-tert-butyl-3,5-dimethylphenoxy group, pentamethylphenoxy group, an ethylphenoxy group, a n-propylphenoxy group, an isopropylphenoxy group, a n-butylphenoxy group, a sec-butylphenoxy group, a tert-butylphenoxy group, a n-hexylphenoxy group, a n-octylphenoxy group, a n-decylphenoxy group, a n-tetradecylphenoxy group, a naphthoxy group and an anthracenoxy group.

All of these aryloxy groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

The di-substituted amino group in the substituent, $X^1$, is an amino group substituted with two hydrocarbon groups or silyl groups, and examples of the hydrocarbon group include alkyl groups having 1 to 10 carbon atoms such as a methyl group, an ethyl group, a n-propyl group, an isopropyl group, an-butyl group, a sec-butyl group, a tert-butyl group, an isobutyl group, a n-pentyl group, a n-hexyl group and a cyclohexyl group; aryl groups having 6 to 10 carbon atoms such as a phenyl group; and aralkyl groups having 7 to 10 carbon atoms such as a benzyl group

The silyl group include, for example, a trimethylsilyl group and tert-butyldimethylsilyl group.

Examples of such di-substituted amino group include a dimethylamino group, a diethylamino group, a di-n-propylamino group, a diisopropylamino group, a di-n-butylamino group, a di-sec-butylamino group, a di-tert-butylamino group, a di-isobutylamino group, a tert-butylisopropylamino group, a di-n-hexylamino group, a di-n-octylamino group, a diphenylamino group, a bistrimethylsilylamino group and a bis-tert-butyldimethylsilylamino group, and a dimethylamino group, an diethylamino group, a diisopropylamino group, a di-tert-butylamino group, a bis-trimethylsilylamino group are preferred.

All of these di-substituted amino groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

As the alkylthio group in the substituent, $X^1$, an alkylthio group having 1 to 20 carbon atoms is preferred, and examples include a methylthio group, an ethylthio group, a n-propylthio group, an isopropylthio group, a n-butylthio group, a sec-butylthio group, a tert-butylthio group, a n-pentylthio group, a neopentylthio group, a n-hexylthio group, a n-octylthio group, a n-dodecylthio group, a n-pentadecylthio group and a n-eicosylthio group, and a methylthio group, an ethylthio group, an isopropylthio group or a tert-butylthio group is more preferable.

All of these alkylthio groups may be substituted with a halogen atom such as a fluorine atom, a chlorine atom, a bromine atom or an iodine atom. Further, all of these alkylthio groups may be partially substituted with an alkoxy group such as a methoxy group and an ethoxy group, an aryloxy group such as a phenoxy group or an aralkyloxy group such as a benzyloxy group.

As the aralkylthio group in the substituent, $X^1$, an aralkylthio group having 7 to 20 carbon atoms is preferable, and examples thereof include a benzylthio group, a (2-methylphenyl)methylthio group, a (3-methylphenyl)methylthio group, a (4-methylphenyl)methylthio group, a (2,3-dimethylphenyl)methylthio group, a (2,4-dimethylphenyl)methylthio

group, a (2,5-dimethylphenyl)methylthio group, a (2,6-dimethylphenyl)methylthio group, a (3,4-dimethylphenyl)methylthio group, a (3,5-dimethylphenyl)methylthio group, a (2,3,4-timethylphenyl)methylthio group, a (2,3,5-timethylphenyl)methylthio group, a (2,3,6-timethylphenyl)methylthio group, a (2,4,5-timethylphenyl)methylthio group, a (2,4,6-timethylphenyl)methylthio group, a (3,4,5-timethylphenyl)methylthio group, a (2,3,4,5-tetramethylphenyl)methylthio group, a (2,3,4,6-tetramethylphenyl)methylthio group, a (2,3,5,6-tetramethylphenyl)methylthio group, a (pentamethylphenyl)methylthio group, an (ethylphenyl)methylthio group, a (n-propylphenyl)methylthio group, an (isopropylphenyl)methylthio group, a (n-butylphenyl)methylthio group, a (sec-butylphenyl)methylthio group, a (tert-butylphenyl)methylthio group, a (n-hexylphenyl)methylthio group, a (n-octylphenyl)methylthio group, a (n-decylphenyl)methylthio group, a naphthylmethylthio group and ananthracenylmethylthio group, and a benzylthio group is more preferable.

All of these aralkylthio groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

As the arylthio group in the substituent, $X^1$, an arylthio group having 6 to 20 carbon atoms is preferable, and examples thereof include a phenylthio group, a 2-methyphenylthio group, a 3-methylphenylthio group, a 4-methylphenylthio group, a 2,3-dimethylphenylthio group, a 2,4-dimethylphenylthio group, a 2,5-dimethylphenylthio group, a 2,6-dimethylphenylthio group, a 3,4-dimethylphenylthio group, a 3,5-dimethylphenylthio group, a 2-tert-butyl-3-methylphenylthio group, a 2-tert-butyl-4-methylphenylthio group, a 2-tert-butyl-5-methylphenylthio group, a 2-tert-butyl-6-methylphenylthio group, a 2,3,4-trimethylphenylthio group, a 2,3,5-trimethylphenylthio group, a 2,3,6-trimethylphenylthio group, a 2,4,5-trimethylphenylthio group, a 2,4,6-trimethylphenylthio group, a 2-tert-butyl-3,4-dimethylphenylthio group, a 2-tert-butyl-3,5-dimethylphenylthio group, a 2-tert-butyl-3,6-dimethylphenylthio group, a 2,6-di-tert-butyl-3-methylphenylthio group, a 2-tert-butyl-4,5-dimethylphenylthio group, a 2,6-di-tert-butyl-4-methylphenylthio group, a 3,4,5-trimethylphenylthio group, a 2,3,4,5-tetramethylphenylthio group, a 2,3,4,6-tetramethylphenylthio group, a 2-tert-butyl-3,4,6-trimethylphenylthio group, a 2,6-di-tert-butyl-3,4-dimethylphenylthio group, a 2,3,5,6-tetramethylphenylthio group, a 2-tert-butyl-3,5,6-trimethylphenylthio group, a 2,6-di-tert-butyl-3,5-dimethylphenulthio group, a pentamethylphenylthio group, an ethylphenylthio group, a n-propylphenylthio group, an isopropylphenylthio group, a n-butylphenylthio group, a sec-butylphenylthio group, a tert-butylphenylthio group, a n-pentylphenylthio group, a neopentylphenylthio group, a n-hexylphenylthio group, a n-octylphenylthio group, a n-decylphenylthio group, a n-tetradecylphenylthio group, a naphthylthio group and an anthracenylthio group.

All of these arylthio groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group,

As the alkylseleno group in the substituent, $X^1$, an alkyl group having 1 to 20 carbon atoms is preferred, and examples include a methylseleno group, an ethylseleno group, a n-propylseleno group, an isopropylseleno group, a n-butylseleno group, a sec-butylseleno group, a tert-butylseleno group, a n-pentylseleno group, a neopentylseleno group, a n-hexylseleno group, a n-octylseleno group, a n-dodecylseleno group, a n-pentadecylseleno group and a n-eicosylseleno group,

and a methylseleno group, an ethylseleno group, an isopropylseleno group or a tert-butylseleno group is more preferable.

All of these alkylseleno groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

As the aralkylseleno group in the substituent, $X^1$, an aralkylseleno group having 7 to 20 carbon atoms is preferable, and examples thereof include a benzylseleno group, a (2-methylphenyl)methylseleno group, a (3-methylphenyl)methylseleno group, a (4-methylphenyl)methylseleno group, a (2,3-dimethylphenyl)methylseleno group, a (2,4-dimethylphenyl)methylseleno group, a (2,5-dimethylphenyl)methylseleno group, a (2,6-dimethylphenyl)methylseleno group, a (3,4-dimethylphenyl)methylseleno group, a (3,5-dimethylphenyl)methylseleno group, a (2,3,4-timethylphenyl)methylseleno group, a (2,3,5-timethylphenyl)methylseleno group, a (2,3,6-timethylphenyl)methylseleno group, a (2,4,5-timethylphenyl)methylseleno group, a (2,4,6-timethylphenyl)methylseleno group, a (3,4,5-timethylphenyl) methylseleno group, a (2,3,4,5-tetramethylphenyl)methylseleno group, a (2,3,4,6-tetramethylphenyl)methylseleno group, a (2,3,5,6-tetramethylphenyl)methylseleno group, a (pentamethylphenyl)methylseleno group, an (ethylphenyl) methylseleno group, a (n-propylphenyl)methylseleno group, an (isopropylphenyl)methylseleno group, a (n-butylphenyl) methylseleno group, a (sec-butylphenyl)methylseleno group, a (tert-butylphenyl)methylseleno group, a (n-hexylphenyl) methylseleno group, a (n-octylphenyl)methylseleno group, a (n-decylphenyl)methylseleno group, a naphthylmethylseleno group and an anthracenylmethylseleno group, and a benzylseleno group is more preferable.

All of these aralkylseleno groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

As the arylseleno group in the substituent, $X^1$, an arylseleno group having 6 to 20 carbon atoms is preferable,

and examples thereof include a phenylseleno group, a 2-methylphenylseleno group, a 3-methylphenylseleno group, a 4-methylphenylseleno group, a 2,3-dimethylphenylseleno group, a 2,4-dimethylphenylseleno group, a 2,5-dimethylphenylseleno group, a 2,6-dimethylphenylseleno group, a 3,4-dimethylphenylseleno group, a 3,5-dimethylphenylseleno group, a 2-tert-butyl-3-methylphenylseleno group, a 2-tert-butyl-4-methylphenylseleno group, a 2-tert-butyl-5-methylphenylseleno group, a 2-tert-butyl-6-methylphenylseleno group, a 2,3,4-trimethylphenylseleno group, a 2,3,5-trimethylphenylseleno group, a 2,3,6-trimethylphenylseleno group, a 2,4,5-trimethylphenylseleno group, a 2,4,6-trimethylphenylseleno group, a 2-tert-butyl-3,4-dimethylphenylseleno group, a 2-tert-butyl-3,5-dimethylphenylseleno group, a 2-tert-butyl-3,6-dimethylphenylseleno group, a 2,6-di-tert-butyl-3-methylphenylseleno group, a 2-tert-butyl-4,5-dimethylphenylseleno group, a 2,6-di-tert-butyl-4-methylphenylseleno group, a 3,4,5-trimethylphenylseleno group, a 2,3,4,5-tetramethylphenylseleno group, a 2,3,4,6-tetramethylphenylseleno group, a 2-tert-butyl-3,4,6-trimethylphenylseleno group, a 2,6-di-tert-butyl-3,4-dimethylphenylseleno group, a 2,3,5,6-tetramethylphenylseleno group, a 2-tert-butyl-3,5,6-trimethylphenylseleno group, a 2,6-di-tert-butyl-3,5-dimethylphenulseleno group, a pentamethylphenylseleno group, an ethylphenylseleno group, a n-propylphenylseleno group, an isopropylphenylseleno group, an-butylphenylseleno group, a sec-butylphenylseleno group, a tert-butylphenylseleno group, a n-pentylphenylseleno group, a neopentylphenylseleno group, a n-hexylphenylseleno group, a n-octylphenylseleno group, a n-decylphenylseleno group, a n-tetradecylphenylseleno group, a naphthylseleno group and an anthracenylseleno group.

All of these arylseleno groups may be partially substituted with a halogen atom such as a fluorine atom, a chlorine atom, a bromine atom or an iodine atom, an alkoxy group such as a methoxy group and an ethoxy group, an aryloxy group such as a phenoxy group or an aralkyloxy group such as a benzyloxy group.

$X^1$ is preferably a halogen atom, an alkyl group, an aralkyl group, an alkoxy group, an aryloxy group or a di-substituted amino group, and more preferably a halogen atom, an alkyl group, an alkoxy group or an aryloxy group.

$X^2$ in the general formula (I) or (II) represents an atom of Group XVI of the Periodic Table of the Elements, and specific examples thereof include an oxygen atom, a sulfur atom and a selenium atom, an oxygen atom or a sulfur atom is preferable and an oxygen atom is more preferable.

In the general formula (I) or (II) above, Cp may be bonded to $X^1$ directly or trough a bridging group. The bridging group includes a divalent bridging group containing an atom of the Group XIV of the Periodic Table of the Elements and the like, preferably a divalent bridging group containing a carbon atom or silicon group, more preferably a divalent bridging group in which an atom bonded to Cp and X1 is a carbon atom and/or silicon atom, further preferably a divalent bridging group in which an atom bonded to Cp and $X^1$ is a carbon atom and/or silicon atom and in which Cp is bonded to $X^1$ through at most 3 atoms. Specific examples thereof include a methylene group, ethylene group, propylene group, dimethylmethylene group(isopropylidene group), diphenylmethylene group, tetramethylethylene group, silylene group, dimethylsilylene group, diethylsilylene group, diphenylsilylene group, tetramethyldisilylene group and dimethoxysilylene group, preferably a methylene group, ethylene group, dimethylmethylene group, dimethylsilylene group, diethylsilylene group and diphenylsilylene group. Preferably, the transition metal compound represented by the general formula(I) or (II) is a transition metal compound in which Cp is bonded to $X^1$ trough a bridging group.

As the transition metal compound used in the present invention, a transition metal compound represented by the general formula (III) or (IV) below is more preferable:

$$CpYMX^1_2 \qquad \text{(III)}$$

$$(CpYMX^1_n)_2X^2_{2-n} \qquad \text{(IV)}$$

(wherein respective M, Cp, $X^1$ and $X^2$ is the same as defined in the general formula (I)or (II) above; Y is a group having at least one atom of the Group XV or XVI of the Periodic Table of the Elements and σ-bonding to M through the atom in the group; Cp and $X^1$ may be bonded each other directly or through a bridging group; n is 0 or 1; and a plurality of respective Cp, M, $X^1$ and $X^2$ may be the same or different.)

Y in the formula (III) or (IV) represents a group having an atom of the Group XV or XVI of the Periodic Table of the Elements and σ-bonding to M through the atom in the group, for example, a group having an oxygen atom, nitrogen atom, sulfur atom or phosphorus atom and σ -bonding to M through the atom in the group, respectively, preferably having an oxygen atom or nitrogen atom and σ-bonding to M through the oxygen atom or nitrogen atom.

In the general formula (III) or (IV) described above, respective Cp and Y are bonded to each other directly or through a bridging group. The bridging group includes a divalent bridging group containing at least one atom of the Group XIV, XV or XVI of the Periodic Table of the Elements (Revised edition of IUPAC Inorganic Chemistry Nomenclature 1989), preferably a divalent bridging group containing a carbon atom and/or silicon atom, more preferably a divalent bridging group in which an atom bonding to Cp or Y is a carbon atom or silicon atom, and particularly preferably

a divalent bridging group in which an atom bonding to Cp or Y is a carbon atom or silicon atom, and in which Cp is bonded to Y through at most 3 atoms.Examples of the divalent bridging group include the following divalent groups:

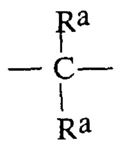 , 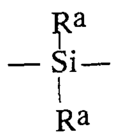 , $-O-$ , $-S-$ , $-S-S-$ , $-SO-$ , $-SO_2-$ ,

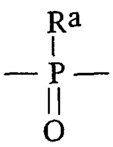 , 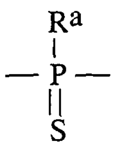 , 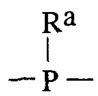 , 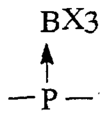 and 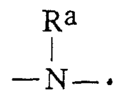 .

Wherein, $R^a$ represents a halogen atom, an alkyl group having 1 to 20 carbon atoms , which may be substituted with a halogen atom, an aralkyl group having 7 to 20 carbon atoms, which may be substituted with a halogen atom or an aryl group having 6 to 20 carbon atoms, which may be substituted with a halogen atom, and X represents a hydrogen atom or halogen atom.

Specific examples thereof preferably include a methylene group, ethylene group, propylene group, dimethylmethylene group(isopropylidene group), diphenylmethylene group, tetramethylethylene group, silylene group, dimethylsilylene group, diethylsilylene group, diphenylsilylene group, tetramethyldisilylene group and dimethoxysilylene group, more preferably a methylene group, ethylene group, dimethylmethylene group, dimethylsilylene group, diethylsilylene group and diphenylsilylene group.

As Y, examples of a group σ-bonding to M through an oxygen atom include -O-, an alkoxy group, aryloxy group and aralkyloxy group, and specific examples include -O- and the same examples as those listed in the alkoxy group, aryloxy group and aralkyloxy group of $X^1$. Herein, -O- means that an oxygen atom is σ-bonded to M and is bonded to Cp through a bridging group.

As Y, examples of a group σ-bonding to M through a nitrogen atom include a mono-substituted amino group and di-substituted amino group, and specific examples include the same examples as those listed in the di-substituted amino group of $X^1$.

As a substituent, Y, a mono-substituted group is an amino group substituted with one hydrocarbon or silyl group, and the hydrocarbon group includes an alkyl group having 1 to 10 carbon atoms such as a methyl group, ethyl group, n-propyl group, isopropyl group, n-butyl group, sec-butyl group, tert-butyl group, isobutyl group, n-pentyl group, n-hexyl group and cyclohexyl group; an aryl group having 6 to 10 carbon atoms such as a phenyl group; and an aralkyl group having 7 to 10 carbon atoms such as a benzyl group. Examples of the silyl group include a trimethylsilyl group and tert-butyldimethylsilyl group.

Examples of the mono-substituted amino group include, for example, a methylamino group, ethylamino group, n-propylamino group, isopropylamino group, n-butylamino group, sec-butylamino group, tert-butylamino group, isobutylamino group, n-pentylamino group, n-hexylamino group, n-octylamino group, phenylamino group, trimethylsilyl amino group and tert-butyldimethylsilylamino group, and preferably a methylamino group, ethylamino group, isopropylamino group, tert-butylamino group and trimethylsilyl amino group. These mono-substituted amino group may be partially substituted with a halogen atom such as a fluorine atom, chlorine atom, bromine atom and iodine atom, an alkoxy group such as methoxy group and ethoxy group, an aryloxy group such as phenoxy group and an aralkyloxy group such as benzyloxy group.

In the mono-substituted amino group as Y , the nitrogen atom is σ -bonded to M and is bonded to Cp through a bridging group.

Specific examples of the transition metal compound represented by the general formula (III) or (IV) include dimethylsilylene(methylamino)(cyclopentadienyl)titanium dichloride, dimethylsilylene(tert-butylamino) (cyclopentadienyl)titanium dichloride, dimethylsilylene (phenylamino)(cyclopentadienyl)titanium dichloride and dimethylsilylene(cyclohexylamino)(cyclopentadienyl) titanium dichloride, compounds in which cyclopentadienyl in the above-compounds is replaced with methylcyclopentadienyl, tetramethylcyclopentadienyl, ethylcyclopentadienyl, n-butylcyclopentadienyl, tert-butylcyclopentadienyl, di-tert-butylcyclopentadienyl, tert-butylmethylsilylcyclopentadienyl, phenylcyclopentadienyl, ethylindenyl, phenylindenyl or fluorenyl, compounds in which dimethylsilylene in the above-compounds is replaced with dimethylsilylene, diphenylsilylene, methylene, ethylene or isopropylidene, compounds in which titanium in the above-compounds is replaced with zirconium or hafnium, and compounds in which dichloride in the above-compounds is replaced with dimethyl, dimethoxide, bis(dimethylamido) or bis(diethylamide); μ -oxobis{dimethylsilylene (methylamino)(cyclopentadienyl) titanium chloride}, μ -oxobis{dimethylsilylene(tert-butylamino) (cyclopentadienyl)titanium chloride}, μ -oxobis{dimethylsilylene (phenylamino)(cyclopentadienyl)titanium chloride} and μ -oxobis{dimethylsilylene(cyclohexylamino)(cyclopentadie nyl) titanium chloride}, compounds in which cyclopentadienyl in the above-compounds is replaced with methylcyclopentadienyl, tetramethylcyclopentadienyl, ethylcyclopentadienyl, n-butylcyclopentadienyl, tert-butylcyclopentadienyl, di-tert-butylcyclopentadienyl, tert-butylmethylsilylcyclopentadienyl, phenylcyclopentadienyl, ethylindenyl, phenylindenyl or fluorenyl, compounds in which dimethylsilylene in the above-compounds is replaced with dimethylsilylene, diphenylsilylene, methylene, ethylene or isopropylidene, compounds in which titanium in the above-compounds is replaced with zirconium or hafnium, and compounds in which chloride in the above-compounds is replaced with methyl, methoxide, dimethylamido or diethylamide; and di-μ -oxobis{dimethylsilylene (methylamino)(cyclopentadienyl) titanium}, di- μ -oxobis{dimethylsilylene(tert-butylamino) (cyclopentadienyl)titanium}, di-μ -oxobis{dimethylsilylene (phenylamino)(cyclopentadienyl)titanium) and di-μ -oxobis{dimethylsilylene(cyclohexylamino)(cyclopentadie nyl)titanium}, compounds in which cyclopentadienyl in the above-compounds is replaced with methylcyclopentadienyl, tetramethylcyclopentadienyl, ethylcyclopentadienyl, n-butylcyclopentadienyl, tert-butylcyclopentadienyl, di-tert-butylcyclopentadienyl, tert-butylmethylsilylcyclopentadienyl, phenylcyclopentadienyl, ethyindenyl, phenylindenyl or fluorenyl, compounds in which dimethylsilylene in the above-compounds is replaced with dimethylsilylene, diphenylsilylene, methylene, ethylene or isopropylidene, and compounds in which titanium in the above-compounds is replaced with zirconium or hafnium.

More preferable transition metal compound used in the present invention include transition metal compounds represented by the general formulas (V), (VI) and (VII);

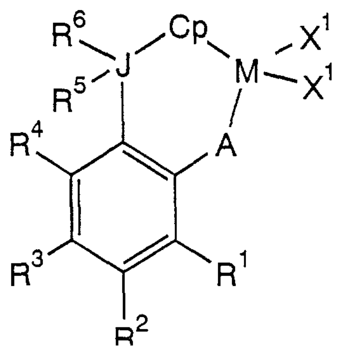

(V)

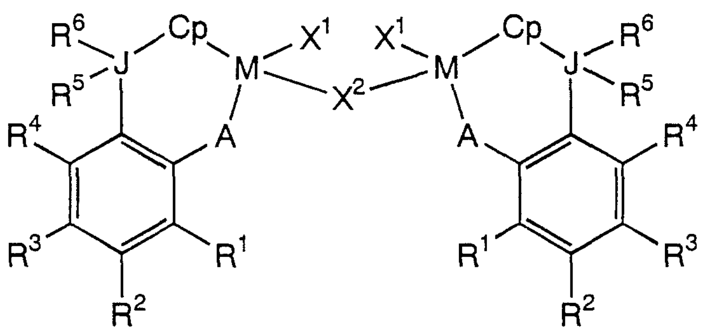

(VI)

,

and

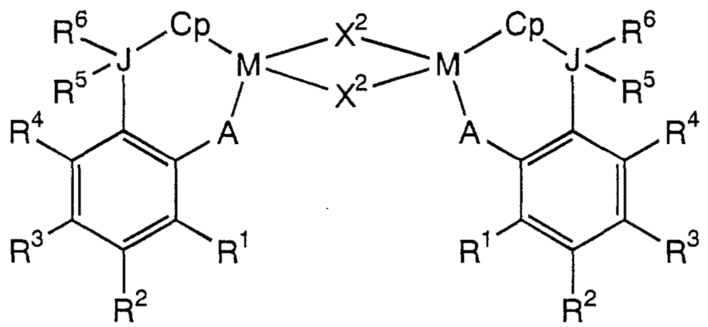

(VII)

wherein, in the general formula (V), (VI) or (VII), M represents a transition metal atom of the Group IV of the Periodic Table of the Elements; A represents an atom of the Group XVI of the Periodic Table of the Elements; J represents an atom of the Group XIV of the Periodic Table of the Elements; Cp represents a group having a cyclopentadiene type anion skeleton; each of $X^1$, $R^1$, $R^2$, $R^3$, $R^4$, $R^5$ and $R^6$ independently represents a hydrogen atom, a halogen atom, an alkyl group, an aralkyl group, an aryl group, a substituted silyl group, an alkoxy group, an aralkyloxy group, an aryloxy group, a di-substituted amino group, an alkylthio group, an aralkylthio group, an arylthio group, an alkylseleno group, an aralkylseleno group or arylseleno group; $X^2$ represents an atom of Group XVI of the Periodic Table of the Elements; $R^1$, $R^2$, $R^3$, $R^4$, $R^5$ and $R^6$ may be optionally combined with each other to form a ring; and in the general formula (VI) or (VII), two of M, A, J, Cp, $X^1$, $X^2$, $R^1$, $R^2$, $R^3$, $R^4$, $R^5$ and $R^6$ may be respectively the same or different.

M, Cp, and $X^2$ in the general formula (V), (VI) or (VII) are the same as those defined in the general formula (I) or (II) described above. And, each of $X^1$, $X^2$, $R^1$, $R^2$, $R^3$, $R^4$, $R^5$ and $R^6$ in the general formula (V), (VI) or (VII) is independently the same as $X^1$ defined in the general formula (I) or (II) described above.

Further, each of $R^1$, $R^2$, $R^3$ and $R^4$ is independently preferably a hydrogen atom, halogen atom, alkyl group, aralkyl group, aryl group, substituted silyl group, alkoxy group, aralkyloxy group or aryloxy group, and among these, alkyl group, aralkyl group, aryl group or substituted silyl group as R1 are more preferable.

Moreover, each of $R^5$ and $R^6$ in the general formula (V), (VI) or (VII), is independently preferably a hydrogen atom, alkyl group, aralkyl group, aryl group, substituted silyl group, alkoxy group, aralkyloxy group or aryloxy group.

Furthermore, A in the general formula (V), (VI) or (VII), is an atom of the Group XVI of the Periodic Table of the Elements such as an oxygen atom, sulfur atom or selenium atom, preferably an oxygen atom.

J in the general formula (V), (VI) or (VII), represents a transition metal atom of the Group IV of the Periodic Table of the Elements such as a carbon atom, silicon atom or germanium atom, and preferably a carbon atom and silicon atom.

As such transition metal compounds, specific examples of those represented by the general formula (V) include methylene( $\eta^5$-cyclopentadienyl)(3,5-dimethyl-2-phenoxy) titanium dichloride, methylene( $\eta^5$-cyclopentadienyl)(3-tert-butyl-2-phenoxy)titanium dichloride, methylene($\eta^5$-cyclopentadienyl)(3-tert-butyl-5-methyl-2-phenoxy)tit anium dichloride, methylene( $\eta^5$-cyclopentadienyl)(3-phenyl-2-phenoxy)titanium dichloride, methylene( $\eta^5$-cyclopentadienyl)(3-tert-butyldimethylsilyl-5-methyl-2-phenoxy)titanium dichloride, methylene( $\eta^5$-cyclopentadienyl)(3-trimethylsilyl-5-methyl-2-phenoxy )titanium dichloride, methylene( $\eta^5$-cyclopentadienyl)(3-tert-butyl-5-methoxy-2-phenoxy)ti tanium dichloride, methylene( $\eta^5$-cyclopentadienyl)(3-tert-butyl-5-chloro-2-phenoxy)tit anium dichloride, methylene ( $\eta^5$-tetramethylcyclopentadienyl)(3,5-dimethyl-2-phenoxy)t itanium dichloride, methylene( $\eta^5$-tetramethylcyclopentadienyl)(3-tert-butyl-2-phenoxy)t itanium dichloride, methylene( $\eta^5$-tetramethylcyclopentadienyl)(3-tert-butyl-5-methyl-2-phenoxy)titanium dichloride, methylene( $\eta^5$-tetramethylcyclopentadienyl)(3-phenyl-2-phenoxy)titan ium dichloride, methylene( $\eta^5$-tetramethylcyclopentadienyl)(3-tert-butyldimethylsily 1-5-methyl-2-phenoxy)titanium dichloride, methylene( $\eta^5$-tetramethylcyclopentadienyl)(3-trimethylsilyl-5-methy 1-2-phenoxy)titanium dichloride, methylene ( $\eta^5$-tetramethylcyclopentadienyl)(3-tert-butyl-5-methoxy-2 -phenoxy)titanium dichloride, methylene( $\eta^5$-tetramethylcyclopentadienyl)(3-tert-butyl-5-chloro-2-phenoxy)titanium dichloride, isopropylidene( $\eta^5$-cyclopentadienyl)(3,5-dimethyl-2-phenoxy)titanium dichloride, isopropylidene( $\eta^5$-cyclopentadienyl)(3-tert-butyl-2-phenoxy)titanium dichloride, isopropylidene( $\eta^5$-cyclopentadienyl)(3-tert-butyl-5-methyl-2-phenoxy)tit anium dichloride, isopropylidene ( $\eta^5$-cyclopentadienyl)(3-phenyl-2-phenoxy)titanium dichloride, isopropylidene( $\eta^5$-cyclopentadienyl)(3-tert-butyldimethylsilyl-5-methyl-2-phenoxy)titanium dichloride, isopropylidene( $\eta^5$-cyclopentadienyl)(3-trimethylsilyl-5-methyl-2-phenoxy )titanium dichloride, isopropylidene( $\eta^5$-cyclopentadienyl)(3-tert-butyl-5-methoxy-2-phenoxy)ti tanium dichloride, isopropylidene ( $\eta^5$-cyclopentadienyl)(3-tert-butyl-5-chloro-2-phenoxy) titanium dichloride, isopropylidene ( $\eta^5$-tetramethylcyclopentadienyl)(3,5-dimethyl-2-phenoxy)t itanium dichloride, isopropylidene( $\eta^5$-tetramethylcyclopentadienyl)(3-tert-butyl-2-phenoxy)t itanium dichloride, isopropylidene( $\eta^5$-tetramethylcyclopentadienyl)(3-tert-butyl-5-methyl-2-phenoxy)titanium dichloride, isopropylidene( $\eta^5$-tetramethylcyclopentadienyl)(3-phenyl-2-phenoxy) titan ium dichloride, isopropylidene( $\eta^5$-tetramethylcyclopentadienyl)(3-tert-butyldimethylsily 1-5-methyl-2-phenoxy)ti-

tanium dichloride, isopropylidene(η $^5$-tetramethylcyclopentadienyl)(3-trimethylsilyl-5-methy 1-2-phenoxy)titanium dichloride, isopropylidene( η $^5$-tetramethylcyclopentadienyl)(3-tert-butyl-5-methoxy-2 -phenoxy)titanium dichloride, isopropylidene( η $^5$-tetramethylcyclopentadienyl)(3-tert-butyl-5-chloro-2-phenoxy)titanium dichloride, diphenylmethylene( η $^5$-cyclopentadienyl)(3,5-dimethyl-2-phenoxy)titanium dichloride, diphenylmethylene( η $^5$-cyclopentadienyl) (3-tert-butyl-2-phenoxy)titanium dichloride, diphenylmethylene( η $^5$-cyclopentadienyl)(3-tert-butyl-5-methyl-2-phenoxy)tit anium dichloride, diphenylmethylene( η $^5$-cyclopentadienyl)(3-phenyl-2-phenoxy)titanium dichloride, diphenylmethylene( η $^5$-cyclopentadienyl)(3-tert-butyldimethylsilyl-5-methyl-2-phenoxy)titanium dichloride, diphenylmethylene ( η $^5$-cyclopentadienyl)(3-trimethylsilyl-5-methyl-2-phenoxy) titanium dichloride, diphenylmethylene( η $^5$-cyclopentadienyl)(3-tert-butyl-5-methoxy-2-phenoxy)ti tanium dichloride, diphenylmethylene( η $^5$-cyclopentadienyl)(3-tert-butyl-5-chloro-2-phenoxy)tit anium dichloride, diphenylmethylene( η $^5$-tetramethylcyclopentadienyl)(3,5-dimethyl-2-phenoxy)t itanium dichloride, diphenylmethylene( η $^5$-tetramethylcyclopentadienyl)(3-tert-butyl-2-phenoxy)t itanium dichloride, diphenylmethylene( η $^5$-tetramethylcyclopentadienyl)(3-tert-butyl-5-methyl-2-phenoxy)titanium dichloride, diphenylmethylene( η $^5$-tetramethylcyclopentadienyl)(3-phenyl-2-phenoxy)titan ium dichloride, diphenylmethylene ( η $^5$-tetramethylcyclopentadienyl)(3-tert-butyldimethylsily 1-5-methyl-2-phenoxy)titanium dichloride, diphenylmethylene (η$^5$-tetra methylcyclopentadienyl)(3-trimethylsilyl-5-methyl-2-phe noxy)titanium dichloride, diphenylmethylene ( η $^5$-tetramethylcyclopentadienyl)(3-tert-butyl-5-methoxy-2 -phenoxy)titanium dichloride and diphenylmethylene (η $^5$-tetramethylcyclopentadienyl)(3-tert-butyl-5-chloro-2-phenoxy)titanium dichloride; compounds in which titanium of these compounds is replaced with zirconium or hafnium; compounds in which dichloride of these compounds is replaced by dimethyl, dibenzyl, dimethoxide, diphenoxide, bis(dimethylamino) or bis(diethylamino); compounds in which ( η$^5$-cyclopentadienyl) of these compounds is replaced with ( η$^5$-methylcyclopentadienyl), ( η $^5$-dimethylcyclopentadienyl), ( η $^5$-trimethylcyclopentadienyl), ( η 5-n-butylcyclopentadienyl), ), ( η $^5$-tert-butylcyclopentadienyl), ( η $^5$-trimethylsilylcyclopentadienyl), ( η $^5$-tert-butyldimethylsilylcyclopentadienyl), ( η$^5$-indenyl), ( η$^5$-methylindenyl), ( η$^5$-phenylindenyl) or ( η $^5$-fluorenyl); compounds in which (3,5-dimethyl-2-phenoxy) of these compounds is replaced with (2-phenoxy), (3-methyl-2-phenoxy), (3,5-di-tert-butyl-2-phenoxy), (3-phenyl-5-methyl-2-phenoxy), (3-tert-butyldimethylsilyl-2-phenoxy) or (3-trimethylsilyl-2-phenoxy);

Furthermore, dimethylsilylene ( η $^5$-cyclopentadienyl)(2-phenoxy)titanium dichloride, dimethylsilylene( η$^5$-cyclopentadienyl) (3-methyl-2-phenoxy)titanium dichloride, dimethylsilylene ( η$^5$-cyclopentadienyl) (3,5-dimethyl-2-phenoxy)titanium dichloride, dimethylsilylene( η$^5$-cyclopentadienyl) (3-tert-butyl-2-phenoxy)titanium dichloride, dimethylsilylene( η$^5$-cyclopentadienyl) (3-tert-butyl-5-methyl-2-phenoxy)titanium dichloride, dimethylsilylene( η$^5$-cyclopentadienyl) (3,5-di-tert-butyl-2-phenoxy)titanium dichloride, dimethylsilylene ( η$^5$-cyclopentadienyl) (5-methyl-3-phenyl-2-phenoxy)titanium dichloride, dimethylsilylene(η$^5$-cyclopentadienyl) (3-tert-butyldimethylsilyl-5-methyl-2-phenoxy)titanium dichloride, dimethylsilylene( η $^5$-cyclopentadienyl)(5-methyl-3-trimethylsilyl-2-phenoxy )titanium dichloride, dimethylsilylene( η $^5$-cyclopentadienyl)(3-tert-butyl-5-methoxy-2-phenoxy)ti tanium dichloride, dimethylsilylene( η $^5$-cyclopentadienyl)(3-tert-butyl-5-chloro-2-phenoxy)tit anium dichloride, dimethylsilylene( η $^5$-cyclopentadienyl)(3,5-di-sec-amyl-2-phenoxy)titanium dichloride, dimethylsilylene( η $^5$-cyclopentadienyl)(1-naphtoxy-2-yl)titanium dichloride, dimethylsilylene (η$^5$-tetramethylcyclopentadienyl)(2-phenoxy)titanium dichloride, dimethylsilylene( η $^5$-tetramethylcyclopentadienyl)(3-methyl-2-phenoxy) titanium dichloride, dimethylsilylene( η $^5$-tetramethylcyclopentadienyl)(3,5-dimethyl-2-phenoxy)t itanium dichloride, dimethylsilylene( η $^5$-tetramethylcyclopentadienyl)(3-tert-butyl-2-phenoxy)t itanium dichloride, dimethylsilylene( η $^5$-tetramethylcyclopentadienyl)(3-tert-butyl-5-methyl-2-phenoxy)titanium dichloride, dimethylsilylene ( η $^5$-tetramethylcyclopentadienyl)(3,5-di-tert-butyl-2-phen oxy)titanium dichloride, dimethylsilylene( η 5-tetramethylcyclopentadienyl)(5-methyl-3-phenyl-2-phen oxy)titanium dichloride, dimethylsilylene(η $^5$-tetramethylcyclopentadienyl)(3-tert-butyldimethylsily 1-5-methyl-2-phenoxy)titanium dichloride, dimethylsilylene(η$^5$-tetramethylcyclopentadienyl) (5-methyl-3-trimethylsilyl-2-phenoxy)titanium dichloride, dimethylsilylene( η$^5$-tetramethylcyclopentadienyl) (3-tert-butyl-5-methoxy-2-phenoxy)titanium dichloride, dimethylsilylene ( η$^5$-tetramethylcyclopentadienyl) (3-tert-butyl-5-chloro-2-phenoxy)titanium dichloride, dimethylsilylene( ( η$^5$-tetramethylcyclopentadienyl) (3,5-di-sec-amyl-2-phenoxy)titanium dichloride, and dimethylsilylene( η$^5$-tetramethylcyclopentadienyl) (1-naphtoxy-2-yl) titanium dichloride; compounds wherein ( η$^5$-cyclopentadienyl) of these compounds is replaced by ( η$^5$-methylcyclopentadienyl), ( η $^5$-dimethylcyclopentadienyl), ( η $^5$-trimethylcyclopentadienyl), ( η$^5$-ethylcyclopentadienyl), ( η$^5$-n-propylcyclopentadienyl), ( η $^5$-isopropylcyclopentadienyl), ( η $^5$-n-butylcyclopentadienyl),( η $^5$-sec-butylcyclopentadienyl), ( η $^5$-isobutylcyclopentadienyl), ( η $^5$-tert-butylcyclopentadienyl), ( η $^5$-trimethylsilylcyclopentadienyl), ( η $^5$-tert-butyldimethylsilylcyclopentadienyl), ( η $^5$-phenylcyclopentadienyl), ( η$^5$-indenyl) , ( η $^5$-methylindenyl), ( η$^5$-phenylindenyl) or ( η$^5$-fluorenyl); compounds wherein (2-phenoxy) of these compounds is replaced with (3-phenyl-2-phenoxy), (3-trimethylsilyl-2-phenoxy) or (3-tert-butyldimethylsilyl-2-phenoxy); compounds in which dimethylsilylene of these compounds is replaced with diethylsilylene, diphenylsilylene or dimethoxysilylene; compounds in which titanium of these compounds is replaced with zirconium or hafnium; and compounds in which dichloride of these compounds is replaced with dimethyl, dibenzyl, dimethoxide, diphenoxide, bis(dimethylamino) or bis(diethylamino).

Specific examples of the transition metal compound represented by the general formula (VI) include μ -oxobis {isopropylidene( η$^5$-cyclopentadienyl) (2-phenoxy)titanium chloride}, μ-oxobis{isopropylidene( η $^5$-cyclopentadienyl)

(2-phenoxy)titanium methoxide}, μ -oxobis{isopropylidene( $\eta^5$-cyclopentadienyl) (3-tert-butyl-5-methyl-2-phenoxy)titanium chloride}, μ -oxobis{isopropylidene( $\eta^5$-cyclopentadienyl) (3-tert-butyl-5-methyl-2-phenoxy)titanium methoxide}, μ -oxobis{isopropylidene( $\eta^5$-methylcyclopentadienyl) (2-phenoxy)titanium chloride}, μ-oxobis{isopropylidene ($\eta^5$-methylcyclopentadienyl) (2-phenoxy)titanium methoxide}, μ-oxobis{isopropylidene( $\eta^5$-methylcyclopentadienyl) (3-tert-butyl-5-methyl-2-phenox y)titanium chloride}, μ-oxobis{isopropylidene ( $\eta^5$-methylcyclopentadienyl) (3-tert-butyl-5-methyl-2-phenoxy)titanium methoxide}, μ -oxobis{isopropylidene ( $\eta^5$-tetramethylcyclopentadienyl)(2-phenoxy)titanium chloride}, μ-oxobis{isopropylidene( $\eta^5$-tetramethylcyclopentadienyl)(2-phenoxy)titanium methoxide}, μ-oxobis{isopropylidene( $\eta^5$-tetramethylcyclopentadienyl)(3-tert-butyl-5-methyl-2-p henoxy)titanium chloride}, μ-oxobis {isopropylidene ( $\eta^5$-tetramethylcyclopentadienyl) (3-tert-butyl-5-methyl-2-phenoxy)titanium methoxide}, μ -oxobis {dimethylsilylene( $\eta^5$-cyclopentadienyl)(2-phenoxy)titanium chloride}, μ -oxobis{dimethylsilylene( $\eta^5$-cyclopentadienyl)(2-phenoxy)titanium methoxide}, μ -oxobis{dimethylsilylene( $\eta^5$-cyclopentadienyl)(3-tert-butyl-5-methyl-2-phenoxy)tit anium chloride}, μ -oxobis(dimethylsilylene( $\eta^5$-cyclopentadienyl)(3-tert-butyl-5-methyl-2-phenoxy)tit anium methoxide}, μ-oxobis{dimethylsilylene( $\eta^5$-methylcyclopentadienyl)(2-phenoxy)titanium chloride}, μ-oxobis{dimethylsilylene($\eta^5$-methylcyclopentadienyl)(2-phenoxy)titanium methoxide}, μ -oxobis{dimethylsilylene($\eta^5$-methylcyclopentadienyl)(3-tert-butyl-5-methyl-2-pheno xy)titanium chloride}, μ -oxobis{dimethylsilylene( $\eta^5$-methylcyclopentadienyl) (3-tert-butyl-5-methyl-2-pheno xy)titanium methoxide}, μ-oxobis{dimethylsilylene( $\eta^5$-tetramethylcyclopentadienyl) (2-phenoxy)titanium chloride}, μ-oxobis{dimethylsilylene( $\eta^5$-tetramethylcyclopentadienyl)(2-phenoxy)titanium methoxide}, μ-oxobis{dimethylsilylene( $\eta^5$-tetramethylcyclopentadienyl)(3-tert-butyl-5-methyl-2-phenoxy)titanium chloride}, μ -oxobis{dimethylsilylene($\eta^5$-tetramethylcyclopentadienyl)(3-tert-butyl-5-methyl-2-phenoxy)titanium methoxide}; compounds in which titanium of these compounds is replaced with zirconium or hafnium; compounds in which chloride of these compounds is replaced with methyl, benzyl, phenoxide, dimethylamino or diethylamino; compounds in which ($\eta^5$-cyclopentadienyl) of these compounds is replaced with ( $\eta^5$-dimethylcyclopentadienyl), ($\eta^5$-trimethylcyclopentadienyl), ( $\eta^5$-n-butylcyclopentadienyl), ( $\eta^5$-tert-butylcyclopentadienyl), ( $\eta^5$-trimethylsilylcyclopentadienyl), ( $\eta^5$-tert-butyldimethylsilylcyclopentadienyl), ( $\eta^5$-indenyl), ( $\eta^5$-methylindenyl), ( $\eta^5$-phenylindenyl) or ( $\eta^5$-fluorenyl); and compounds in which (2-phenoxy) of these compounds is replaced with (3-methyl-2-phenoxy), (3,5-dimethyl-2-phenoxy),(3,5-di-tert-butyl-2-phenoxy), (3-phenyl-5-methyl-2-phenoxy) or (3-trimethylsilyl-5-methyl-2-phenoxy).

Specific examples of the transition metal compound represented by the general formula (VII) include di-μ -oxobis{isopropylidene( $\eta^5$-cyclopentadienyl) (2-phenoxy)titanium}, di-μ -oxobis{isopropylidene( $\eta^5$-cyclopentadienyl) (3-tert-butyl-5-methyl-2-phenoxy)tit anium}, di-μ-oxobis{isopropylidene( $\eta^5$-methylcyclopentadienyl)(2-phenoxy)titanium}, di-μ -oxobis{isopropylidene($\eta^5$-methylcyclopentadienyl) (3-tert-butyl-5-methyl-2-phenoxy)titanium}, di-μ -oxobis {isopropylidene( $\eta^5$-tetramethylcyclopentadienyl) (2-phenoxy)titanium}, di-μ-oxobis{isopropylidene( η 5-tetramethyl cyclopentadienyl) (3-tert-butyl-5-methyl-2-phenoxy)titanium}, di-μ -oxobis{dimethylsilylene ( $\eta^5$-cyclopentadienyl) (2-phenoxy)titanium}, di-μ -oxobis{dimethylsilylene( $\eta^5$-cyclopentadienyl)(3-tert-butyl-5-methyl-2-phenoxy)tit anium), di-μ-oxobis{dimethylsilylene($\eta^5$-methylcyclopentadienyl) (2-phenoxy)titanium}, di- μ -oxobis{dimethylsilylene ( $\eta^5$-methylcyclopentadienyl) (3-tert-butyl-5-methyl-2-phenoxy)titanium), di-μ -oxobis{dimethylsilylene( $\eta^5$-tetramethylcyclopentadienyl)(2-phenoxy)titanium}, di-μ-oxobis(dimethylsilylene( $\eta^5$-tetramethyl cyclopentadienyl)(3-tert-butyl-5-methyl-2-phenoxy)titan ium}; compounds in which titanium of these compounds is replaced with zirconium or hafnium; compounds in which ( $\eta^5$-cyclopentadienyl) of these compounds is replaced with ( $\eta^5$-dimethylcyclopentadienyl),($\eta^5$-trimethylcyclopentadienyl), ( $\eta^5$-n-butylcyclopentadienyl), ( $\eta^5$-tert-butylcyclopentadienyl), ( $\eta^5$-trimethylsilylcyclopentadienyl), ( $\eta^5$-tert-butyldimethylsilylcyclopentadienyl), ($\eta^5$-indenyl), ( $\eta^5$-methylindenyl), ( $\eta^5$-phenylindenyl) or ( $\eta^5$-fluorenyl); and compounds in which (2-phenoxy) of these compounds is replaced with (3-methyl-2-phenoxy), (3,5-dimethyl-2-phenoxy),(3,5-di-tert-butyl-2-phenoxy), (3-phenyl-5-methyl-2-phenoxy) or (3-trimethylsilyl-5-methyl-2-phenoxy).

These transition metal compounds can be synthesized by a known method.

(B) Aluminum compound

The aluminum compound (B) used in the present invention is an aluminum compound selected from the following (B1) to (B3);

(B1) an organoaluminum compound represented by the general formula $E^1{}_aAlZ_{3-a}$,
(B2) a cyclic aluminoxane having a structure represented by the general formula $\{-Al(E^2)-O-\}_b$, and
(B3) a linear aluminoxane having a structure represented by the general formula $E^3\{-Al(E^3)-O-\}_cAlE^3{}_2$

(wherein $E^1$, $E^2$ and $E^3$ respectively represent a hydrocarbon group, all of $E^1$, $E^2$ and $E^3$ may be the same or different, Z represents a hydrogen atom or a halogen atom, and all of Z may be the same or different, a represents a numeral satisfying $0<a\leqq 3$, b represents an integer of not less than 2, and c represents an integer of not less than 1.)

As the hydrocarbon group in $E^1$, $E^2$ or $E^3$, a hydrocarbon group having 1 to 8 carbon atoms is preferable and

an alkyl group is more preferable.

Specific examples of the organoaluminum compound (B1), represented by the general formula $E_aAlZ_{3-a}$ include trialkylaluminums such as trimethylaluminum, triethylaluminum, tri-n-propylaluminum, triisopropylaluminum, triisobutylaluminum and tri-n-hexylaluminum; dialkylaluminum chlorides such as dimethylaluminum chloride, diethylaluminum chloride, di-n-propylaluminum chloride, diisopropylaluminum chloride, diisobutylaluminum chloride and di-n-hexylaluminum chloride; alkylaluminum dichlorides such as methylaluminum dichloride, ethylaluminum dichloride, n-propylaluminum dichloride, isopropylaluminum dichloride, isobutylaluminum dichloride' and n-hexylaluminum dichloride; and dialkylaluminum hydrides such as dimethylaluminum hydride, diethylaluminum hydride, di-n-propylaluminum hydride, diisopropylaluminum hydride, diisobutylaluminum hydride and di-n-hexylaluminum hydride.

Trialkylaluminums are preferable, and triethylaluminum and triisobutylaluminum are more preferred.

Specific examples of $E^2$ and $E^3$ in the cyclic aluminoxane (B2) having a structure represented by the general formula $\{-Al(E^2)-O-\}_b$ and the linear aluminoxane (B3) having a structure represented by the general formula $E^3-\{Al(E^3)-O-\}_cAlE^3_2$ include alkyl groups such as a methyl group, an ethyl group, a n-propyl group, an isopropyl group, a n-butyl group, an isobutyl group, a n-pentylgroup and a neopentyl group. b is an integer of not less than 2, c is an integer of not less than 1. Preferably, each of E2 and $E^3$ is independently a methyl group or an isobutyl group, b is from 2 to 40 and c is from 1 to 40. Methylaluminoxane, methylisobutylaluminoxane and butylaluminoxane are particularly preferable.

The above aluminoxane is prepared by various methods. The method is not specifically limited, and the aluminoxane may be prepared according to a known method. For example, the aluminoxane is prepared by contacting a solution obtained by dissolving a trialkylaluminum (e.g. trimethylaluminum) in a suitable organic solvent (e.g. benzene, aliphatic hydrocarbon) with water. Also, there can be illustrated a method for preparing the aluminoxane by contacting a trialkylaluminum (e.g. trimethylaluminum) with a metal salt containing crystal water (e.g. copper sulfate hydrate).

It is supposed that thus obtained aluminoxane or a commercial aluminoxane is generally a mixture of (B2) and (B3).

(C) Modified aluminumoxy compound

The modified aluminum oxy compound (C) used in the present invention is a modified aluminumoxy compound obtained by reacting an aluminumoxy compound(C1) with a boron compound (C2) represented by the general formula:

$$BQ^1Q^2Q^3$$

wherein B represents a boron atom in the trivalent valence state; $Q^1$ to $Q^3$ are respectively a halogen atom, a hydrocarbon group, a halogenated hydrocarbon group, a substituted silyl group, an alkoxy group or a di-substituted amino group and they may be the same or different.

(C1) Aluminumoxy compound

An aluminumoxy compound (C1) is used for preparing the modified aluminumoxy compound (C).

Examples of the aluminumoxy compound include methylaluminoxane, ethylaluminoxane, propylaluminoxane, n-butylaluminoxane, isobutylaluminoxane, methylethylaluminoxane, methylbutylaluminoxane, methylisobutylaluminoxane, n-pentylaluminixane and n-hexylaluminoxane.

Further, the aluminumoxy compound (C1) preferably include a cyclic aluminoxanes (C1a) having a structure represented by the general formula $\{-Al(E^2)-O-\}_b$ , a linear aluminoxane (C1b) having a structure represented by the general formula $E^3\{-Al(E^3)-O-\}_cAlE^3{}_2$ (wherein $E^2$ and $E^3$ respectively represent a hydrocarbon group, all of $E^2$ and all of $E^3$ may be the same or different, b represents an integer of not less than 2, and c represents an integer of not less than 1.), and a mixture thereof.

The (C1a) and (C1b) are the same as (B2) and (B3) described above, respectively. As the aluminumoxy compound (C1) used in the present invention, isobutylaluminoxane is most preferable.

The aluminumoxy compounds may be used alone or in combination of 2 or more kinds.

(C2) Boron compound

A boron compound (C2) represented by the general formula:

$$BQ^1Q^2Q^3$$

wherein B and $Q^1$ to $Q^3$ are the same as defined above, is used in preparation of the modified aluminumoxy compound. Each of $Q^1$ to $Q^3$ is preferably a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms or a di-substituted amino group having 2 to 20 carbon atoms, and each of more preferable $Q^1$ to $Q^3$ is a halogen atom, a hydrocarbon group having 1 to 20 carbon atoms or a halogenated hydrocarbon group having 1 to 20 carbon atoms. Each of the more preferable $Q^1$ to $Q^3$ is a fluorinated hydrocarbon group having 1 to 20 carbon atoms which contains at least one fluorine atom, and in particular, each of $Q^1$ to $Q^3$ is preferably a fluorinated aryl group having 6 to 20 carbon atoms which contains at least one fluorine atom.

Specific examples of the compound (C2) include tris(pentafluorophenyl)borane, tris(2,3,5,6-tetrafluorophenyl) borane, tris(2,3,4,5-tetrafluorophenyl)borane, tris(3,4,5-trifluorophenyl)borane, tris(2,3,4-trifluorophenyl)borane and phenylbis(pentafluorophenyl)borane, and tris(pentafluorophenyl)borane is most preferable.

Production of modified aluminumoxy compound

The modified aluminumoxy compound (C) used in the present invention is obtained by reacting the aluminumoxy compound (C1) with the boron compound represented by the general formula $BQ^1Q^2Q^3$ (C2).

The reaction is preferably carried out under an inert gas atmosphere. The reaction temperature is not specifically limited, and is usually -80°C to 200°C, preferably -50°C to 150°C, and more preferably 50°C to 150°C. The reaction time is not specifically limited, and is usually 1 minute to 20 hours and preferably 2 minutes to 15 hours. Further, the reaction may be carried out in the presence or absence of a solvent. The solvent used is not specifically limited, and includes an aliphatic hydrocarbon solvent or an aromatic hydrocarbon solvent. Specific examples thereof include hexane, heptane, benzene and toluene.

The molar ratio of respective components used in the reaction is not specifically limited, and the molar ratio of the component (C1) to the component (C2) [(C1):(C2)] is preferably within a range of 1 : 3 to 1 : 0.01, more preferably 1 : 1 to 1 : 0.05.

The modified aluminumoxy compound obtained by the reaction described above can be used as a catalyst component for olefin polymerization after purification by isolation such as recrystallization, but the reaction solution can be also used for the catalyst component for olefin polymerization as it is. [Polymerization of Olefin]

The polymerization catalyst obtained by contacting the above-mentioned (A) and (C), or (A), (B) and (C) is used. As contact methods, any means can be adopted so far as contact of (A) and (B) or (A), (B) and (C) is completed to form the catalyst. For example, a method in which (A) and (B) or further (C) are mixed to contact them together after diluting at least one of them or without diluting them, and a method in which they are separately supplied in a polymerization reactor to contact them together in the reactor can be adopted.

As a method for supplying respective catalyst components to a polymerization reactor, they are preferably supplied under a water-free condition in an inert gas such as nitrogen or argon.

When (A), (B) and (C) are used to form the catalyst, a reaction product obtained by previously contacting arbitrary two components of them and the remainder may be separately supplied to a polymerization reactor.

With respect to amounts of the respective components used, it is usually desirable to use the respective components so that the molar ratio of the aluminum compound(B) to the transition metal compound (A)[transition metal atom contained in the transition metal compound] is 0.1 to 10000 and preferably 5 to 2000, the molar ratio of the modified aluminumoxy compound(C) to the transition metal compound (A)[transition metal atom contained in the transition metal compound] is 1 to 10000 and preferably 1 to 5000.

When the respective components are used as a solution, a suspension or slurry in which they are dissolved, suspended or slurried in a solvent, the concentration of the respective components is appropriately selected according to the conditions such as the abilities of apparatuses for supplying the respective components in a polymerization reactor. It is desirable to use the respective components so that the concentration of (A) is usually 0.001 to 200 mmol/l in terms of a transition metal atom contained in the transition metal compound (A), more preferably 0.001 to 100 mmol/l and further preferably 0.05 to 50 mmol/l; that of respective (B) and (C) is usually 0.01 to 5000 mmol/l, more preferably 0.1 to 2500 mmol/l and further preferably 0.1 to 2000 mmol/l in terms of Al atom.

The method for supplying the respective components or the catalyst in a polymerization reactor is not particularly limited, and the respective catalyst components may be supplied to the polymerization reactor in a solid state, in a state of a solution dissolved with a hydrocarbon solvent, in a suspension state or in a slurry state.

As olefins which can be applied to the polymerization in the present invention, olefins having 2 to 20 carbon atoms such as, particularly, ethylene and an $\alpha$-olefin having 3 to 20 carbon atoms, diolefins having 4 to 20 carbon atoms can be used, and two or more of olefins described above as monomers can also be used, simultaneously. Specific examples of the olefin include straight chain olefins such as ethylene, propylene, 1-butene, 1-pentene, 1-hexene, 1-heptene, 1-octene, 1-nonene and 1-decene; branched olefins such as 3-methyl-1-butene, 3-methyl-1-pentene, 4-methyl-1-pentene and 5-methyl-1-hexene, and vinylcyclohexane, but the present invention should not be limited to

the above-mentioned compounds . Specific examples of the combination of monomers in case of conducting copolymerization include combinations of ethylene with an α-olefin having 3 to 20 carbon atoms such as ethylene with propylene, ethylene with 1-butene, ethylene with 1-hexene, ethylene with 1-octene and a combination of propylene with 1-butene, but the present invention should not be limited thereto.

The present invention can be effectively applied to the production of the copolymer of ethylene and the α-olefin such as in particular, propylene, 1-butene, 4-methyl-1-pentene, 1-hexene or 1-octene.

The polymerization process should not be also specifically limited, and there can be a solvent polymerization or slurry polymerization in which an aliphatic hydrocarbon such as butane, pentane, hexane, heptane and octane; an aromatic hydrocarbon such as benzene and toluene; or a halogenated hydrocarbon such as methylene dichloride is used as a polymerization medium. Further, a high pressure ionic polymerization in which the polymerization of an olefin is conducted without a solvent under which a produced olefin polymer is melt in the olefin in a supercritical liquid state at a high temperature under a high pressure, and a gas phase polymerization in a gaseous monomer are possible. Further, both of a continuous polymerization and a batch-wise polymerization are possible.

The polymerization temperature can be usually adopted within a range of -50°C to 350°C, preferably 0°C to 300°C, more preferably 50°C to 300°C. The present invention is preferably applied to a high temperature polymerization having a highly industrial value. The polymerization temperature is particularly preferably within a range of 150°C to 350°C

The polymerization pressure can be adopted at a range of usually normal pressure to 350Mpa, normal pressure to 300Mpa, and more preferably normal pressure to 200Mpa.

In the present invention, the polymerization is preferably performed by a high pressure ionic polymerization. Specifically, the polymerization is carried out at a temperature of 100°C or more, preferably 135 to 300°C, under a pressure of at least 30MPa, preferably 35 to 300MPa.

The polymerization may be performed in a batch-wise manner or a continuous manner, preferably a continuous manner. As a reactor, a stirring vessel type reactor or a tubular reactor can be used. The polymerization can be performed in a single reaction zone. Alternatively, the polymerization can also be performed by partitioning one reactor into a plurality of reaction zones or communicating a plurality of reactors in series or parallel. In case of using a plurality of reactors, a combination of vessel reactors or a combination of a vessel reactor and a tubular reactor may be adopted. In a method for polymerizing using a plurality of reaction zones or a plurality of reactors, polymers having different characteristics can also be produced by changing the temperature, pressure and gas composition of each reaction zone.

In general, the polymerization time is appropriately determined according to the kind of a desired polymer and a reaction apparatus, and the conditions are not specifically limited and a range of 1 minute to 20 hours can be adopted. Further, a chain transfer agent such as hydrogen can also be added to adjust the molecular weight of a copolymer in the present invention.

## EXAMPLES

The present invention is further illustrated in detail according to Examples and Comparative Examples below, but the present invention is not limited thereto.

Properties of the polymers in Examples were measured according to methods described below.

(1) Melting point of copolymer:

It was measured under the following conditions using SSC5000 thermal analysis system manufactured by Seiko Instruments Inc.

Heating: heating to 150°C and maintaining for 5 minutes
Cooling: 150°C to 10°C (5°C/min.) and maintaining for 10 minutes
Measurement: 10°C to 160°C (5°C/min.)

(2) Content of repeating unit derived from α-olefin in copolymer:

It was determined from the characteristic absorption of ethylene and α-olefin using an infrared spectrometer (FTIR1600 series, manufactured by Perkin-Elmer Inc.) and was represented as a short-chain branch (SCB) number per 1000 carbon atoms.

(3) Intrinsic viscosity ([η]):

100 mg of a obtained copolymer was dissolved in 50ml of tetralin at 135°C and the solution was set in an oil bath maintained at 135°C. Using an Ubbelohde viscometer, the intrinsic viscosity was determined by the falling speed of the tetralin solution in which said sample was dissolved.
(Unit: dl/g)
(4) Weight average molecular weight (Mw), number average molecular weight (Mn) and molecular weight distribution (Mw/Mn):
They were determined under the following conditions using gel permeation chromatograph (150, C, manufactured by Waters Co.).

Column: TSK gel GMH-HT
Measurement temperature: set at 145°C
Measurement concentration: 10 mg/10 ml ortho-dichlorobenzene

Reference Example 1

[Synthesis of transition metal compound: dimethylsilylene( $\eta^5$-tetramethylcyclopentadienyl) (3-tert-butyl-5-methyl-2-phenoxy)titanium dimethoxide](Compound al)

In a Schlenk tube, 0.131g (4.1mmol) of methyl alcohol was dissolved in 10ml of anhydrous diethyl ether and a diethyl ether solution (3.9ml, 4.1mmol) of methyllithium having a concentration of 1.05mol/L was added dropwise at -78°C thereto. The resulting mixture was heated to 20°C, the formation of lithium methoxide was confirmed by gas generation, and the resulting reaction solution was again cooled to -78°C. Into the reaction solution, 20ml of an anhydrous diethyl ether suspension liquid of 0.919g (2.0mmol) of dimethylsilylene( $\eta^5$-tetramethylcyclopentadienyl)(3-tert-butyl-5-methyl -2-phenoxy)titanium dichloride which was previously prepared in another Schlenk tube was transferred, and then, the resulting reaction mixture was gradually heated to room temperature to obtain a reaction solution. After concentrating the reaction solution, 20ml of toluene was added and an insoluble product was separated by filtration. The filtrate was concentrated to obtain dimethylsilylene( $\eta^5$-tetramethylcyclopentadienyl) (3-tert-butyl-5-methyl-2-phenoxy)titanium dimethoxide represented by the structural formula described below of yellow crystals (0.86g, 95%)(hereinafter, referred to as "Compound al").
$^1$H-NMR (270MHz, $C_6D_6$); δ7.26 (m, 2H), 4.13(s, 6H), 2.33 (s, 3H), 1.97(s, 6H), 1.89(s, 6H), 1.59(s, 9H), 0.55 (s, 6H)

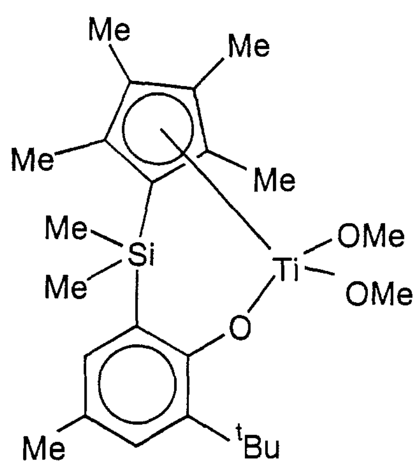

Example 1(1)

After a dropping funnel was installed on a 50ml three-necked flask and the atmosphere was replaced with nitrogen, a thermometer was installed. Into the flask, 10ml of polybutylaluminoxane (PBAO manufactured by Tosoh-Akzo Co., Ltd., hexane solution: 0.68mol/l) was charged and stirred. Into the dropping funnel, 7.4 ml of trispentafluorophenylborane (toluene solution: 0.19mol/l) was charged and added dropwise thereto at 25 to 30°C. After completion

of the dropwise addition, the resultant was heated and stirred at 60°C for 4 hours and further at 80°C for 2 hours. 10.2 ml of toluene was added thereto to obtain a light yellow transparent solution (the concentration of Al is 0.25mol/l according to the charge amount)(hereinafter, referred to as "Compound cl solution").

Example 1(2)

After the atmosphere of a 0.4 liter inner volume of autoclave type reactor equipped with a stirrer was replaced with argon, 185ml of cyclohexane as a solvent and 15ml of 1-hexene as an α-olefin were charged thereto, and the temperature of the reactor was raised to 180°C. After raising the temperature, ethylene was fed while adjusting its pressure at 2.5Mpa. After the system was stabilized, 2 ml of the Compound c1 solution (equivalent to 0.5 mmol in terms of Al atom) and 0.5 ml of a heptane solution in which a mixture of the compound al and triisobutylaluminum was dissolved( the concentration of the compound al is 1 μ mol/ml, the concentration of triisobutylaluminum is 50 μ mol/ml, and the molar ratio of Al to Ti was adjusted to 50) (namely, 0.5 μ mol of the compound al and 25 μ mol of triisobutylaluminum) were charged. Polymerization was carried out for 2 minutes . As a result of the polymerization, 2.32g of an ethylene-1-hexene copolymer having a [η] of 1.69dl/g, an SCB of 29.9, melting points of 85.8°C, Mw of 116600 and Mw/Mn of 1.7 was obtained. Polymerization activity based on 1 mole of Ti atom was $4.6\times10^6$ g/mol-Ti per 2 minutes.

Example 2(1)

After a dropping funnel was installed on a 50ml three-necked flask and the atmosphere was replaced with nitrogen, a thermometer was installed. Into the flask, 10ml of polyisobutylaluminoxane (PBAO manufactured by Tosoh-Akzo Co., Ltd., hexane solution: 0.96mol/l) was charged and stirred. Into the dropping funnel, 9.4 ml of trispentafluorophenylborane (toluene solution: 0.20mol/l) was charged and added dropwise thereto at 25 to 30°C. After completion of the dropwise addition, the resultant was heated to 95°C and stirred for 8 hours. A light yellow transparent solution (the concentration of Al is 0.49mol/l according to the charge amount) (hereinafter, referred to as "Compound c2 solution") was obtained.

Example 2(2)

After the atmosphere of a 0.4 liter inner volume of autoclave type reactor equipped with a stirrer was replaced with argon, 185ml of cyclohexane as a solvent and 15ml of 1-hexene as an α-olefin were charged thereto, and the temperature of the reactor was raised to 180°C. After raising the temperature, ethylene was fed while adjusting its pressure at 2.5Mpa. After the system was stabilized, 1.04 ml of the Compound c2 solution(equivalent to 0.5 mmol in terms of Al atom) and 0.5 ml of a heptane solution in which a mixture of the compound al and triisobutylaluminum was dissolved(the concentration of the compound al is 1 μ mol/ml, the concentration of triisobutylaluminum is 50 μ mol/ml, and the molar ratio of Al to Ti was adjusted to 50) (namely, 0.5 μ mol of the compound al and 25μ mol of triisobutylaluminum) were charged. Polymerization was carried out for 2 minutes. As a result of the polymerization, 4.15g of an ethylene-1-hexene copolymer having a [η] of 1.47dl/g, an SCB of 29.3, melting points of 77.4°C and 88.3°C, Mw of 100100 and Mw/Mn of 1.9 was obtained. Polymerization activity based on 1 mole of Ti atom was $8.3\times10^6$ g/mol-Ti per 2 minutes.

Comparative Example 1

After the atmosphere of a 0.4 liter inner volume of autoclave type reactor equipped with a stirrer was replaced with argon, 185ml of cyclohexane as a solvent and 15ml of 1-hexene as an α-olefin were charged thereto, and the temperature of the reactor was raised to 180°C. After raising the temperature, ethylene was fed while adjusting its pressure at 2.5Mpa. After the system was stabilized, 0.2 mmol of triisobutylaluminum and 0.5 ml of a heptane solution in which a mixture of the compound al and triisobutylaluminum was dissolved(the concentration of the compound al is 1 μ mol/ml, the concentration of triisobutylaluminum is 50 μ mol/ml)(namely, 0.5 μ mol of the compound al and 25 μ mol of triisobutylaluminum) were charged, and subsequently 1.5 ml of a heptane slurry of dimethylaniliniumtetrakispentafluorophenyl borate(slurry concentration of 1 μ mol/ml) was charged. Polymerization was carried out for 2 minutes. As a result of the polymerization, 2.33g of an ethylene-1-hexene copolymer having a [η] of 1.04dl/g, an SCB of 31.7, melting points of 78.3°C and 89.9°C, Mw of 56500 and Mw/Mn of 1.9 was obtained. Polymerization activity based on 1 mole of Ti atom was $4.7\times10^6$ g/mol-Ti per 2 minutes.

Comparative Example 2

After the atmosphere of a 0.4 liter inner volume of autoclave type reactor equipped with a stirrer was replaced

with argon, 185ml of cyclohexane as a solvent and 15ml of 1-hexene as an α-olefin were charged thereto, and the temperature of the reactor was raised to 180°C. After raising the temperature, ethylene was fed while adjusting its pressure at 2.5Mpa. After the system was stabilized, 0.72ml (equivalent to 0.5mmol in terms of Al atom) of polybutylaluminoxane (PBAO manufactured by Tosoh-Akzo Co., Ltd., and hexane solution: 0.68mol/l), 0.5ml of a heptane solution in which the compound al and tributylaluminixane were mixed (the concentration of the compound al was 1 μ mol/ml and the concentration of PBAO was 50 μ mol/ml, the molar ratio of A1 atom to Ti atom was adjusted at 50.) (namely 0.5μ mol of the compound al and 25 μ mol of tributylaluminixane), and 1.5ml of a heptane slurry of N,N-dimethylaniliniumtetrakispentafluorphenylborate (concentration of 1 μ mol/ml) were charged. Polymerization was carried out for 2 minutes. As a result of the polymerization, 2.20g of an ethylene-hexene-1 copolymer having an [η] of 0.98dl/g, a SCB of 34.8, melting points of 73.6°C and 84.9°C, a Mw of 56300 and a Mw/Mn of 2.4 was obtained. Polymerization activity based on 1 mole of Ti atom was $4.4\times10^6$ g/mol-Ti per 2 minutes.

Comparative Example 3

After the atmosphere of a 0.4 liter inner volume of autoclave type reactor equipped with a stirrer was replaced with argon, 140ml of cyclohexane as a solvent and 60ml of 1-hexene as an α-olefin were charged thereto, and the temperature of the reactor was raised to 180°C. After raising the temperature, ethylene was fed while adjusting its pressure at 2.5Mpa. After the system was stabilized, 1.04 ml of the Compound c2 solution(equivalent to 0.5 mmol in terms of Al atom) prepared in Example 2(1) and 0.5 ml of a heptane solution in which a mixture of bis-n-butylcyclopentadienylzirconium dichloride(herein-after, referred to as "compound a2") and triisobutylaluminum was dissolved(the concentration of the compound a2 is 1 μ mol/ml, the concentration of triisobutylaluminum is 50 μ mol/ml, and the molar ratio of Al to Zr was adjusted to 50) (namely, 0.5μ mol of the compound a2 and 25μ mol of triisobutylaluminum) were charged. Polymerization was carried out for 2 minutes. As a result of the polymerization, 1.37g of an ethylene-1-hexene copolymer having a [η ] of 0.49dl/g, an SCB of 9.3, melting points of 111.2°C and 115.5°C, Mw of 20700 and Mw/Mn of 2.01 was obtained. Polymerization activity based on 1 mole of Zr atom was $2.7\times10^6$ g/mol-Zr per 2 minutes.

As described above in detail, according to the present invention, an olefin polymerization catalyst giving an olefin polymer of high molecular weight and a process for producing an olefin polymer of high molecular weight are provided.

## Claims

1. An olefin polymerization catalyst obtainable by a process comprising contacting (A) and (B), or (A), (B) and (C) described below:

    (A) a transition metal compound in which the number of a transition metal is the same as that of groups having a cyclopentadiene type anion skeleton, in its molecule,
    (B) at least one aluminum compound selected from the following (B1) to (B3);

        (B1) an organoaluminum compound represented by the general formula $E^1{}_aAlZ_{3-a}$,
        (B2) a cyclic aluminoxane having a structure represented by the general formula $\{-Al(E^2)-O-\}_b$, and
        (B3) a linear aluminoxane having a structure represented by the general formula $E^3\{-Al(E^3)-O-\}_cAlE^3{}_2$,

    wherein $E^1$, $E^2$ and $E^3$ respectively represent a hydrocarbon group, all of $E^1$, $E^2$ and $E^3$ may be the same or different, Z represents a hydrogen atom or a halogen atom, and all of Z may be the same or different, a represents a numeral satisfying $0<a\leqq 3$, b represents an integer of not less than 2, and c represents an integer of not less than 1; and
    (C) a modified aluminumoxy compound obtained by reacting an aluminumoxy compound (C1) with a boron compound (C2) represented by the general formula $BQ^1Q^2Q^3$, wherein B is a boron atom in the trivalent valence state; and $Q^1$, $Q^2$ and $Q^3$ are respectively a halogen atom, a hydrocarbon group, a halogenated hydrocarbon group, a substituted silyl group, an alkoxy group or a di-substituted amino group, and they may be the same or different.

2. The olefin polymerization catalyst according to claim 1, wherein (C1) is (C1a) and/or (C1b) described below:

    (C1a) a cyclic aluminoxane having a structure represented by the general formula $\{-Al(E^2)-O-\}_b$, and
    (C1b) a linear aluminoxane having a structure represented by the general formula $E^3\{-Al(E^3)-O-\}_cAlE^3{}_2$, wherein $E^2$ and $E^3$ respectively represent a hydrocarbon group, all of $E^2$ and all of $E^3$ may be the same or different,

b represents an integer of not less than 2, and c represents an integer of not less than 1.

**3.** The olefin polymerization catalyst according to claim 1, wherein respective $Q^1$, $Q^2$ and $Q^3$ are a halogenated hydrocarbon group.

**4.** The olefin polymerization catalyst according to claim 1, wherein the modified aluminumoxy compound(C) is obtained by reacting the aluminumoxy compound (C1) with the boron compound (C2) at a temperature of from 50°C to 150°C.

**5.** The olefin polymerization catalyst according to claim 1, wherein the transition metal compound (A) is a transition metal compound represented by the general formula (I) or (II):

$$CpMX^1_3 \qquad (I)$$

$$(CpMX^1_m)_2X^2_{3-m} \qquad (II),$$

wherein M represents a transition metal atom of the Group IV of the Periodic Table of the Elements; Cp represents a group having a cyclopentadiene type anion skeleton; each of $X^1$'s independently represents a hydrogen atom, a halogen atom, an alkyl group, an aralkyl group, an aryl group, a substituted silyi group, an alkoxy group, an aralkyloxy group, an aryloxy group, a di-substituted amino group, an alkylthio group, an aralkylthio group, an arylthio group, an alkylseleno group, an aralkylseleno group or arylseleno group; $X^2$ represents an atom of Group XVI of the Periodic Table of the Elements; m is 1 or 2; when a plurarity of respective Cp, M, $X^1$ and $X^2$ exists, they may be respectively the same or different, and Cp may be bonded to $X^1$ directly or through a bridging group.

**6.** The olefin polymerization catalyst according to claim 5, wherein (A) is a transition compound in which Cp and $X^1$ in the general formula (I) or (II)are bonded to each other through a bridging group.

**7.** The olefin polymerization catalyst according to claim 1, wherein (A) is a transition metal compound represented by the general formula (III) or (IV) below:

$$CpYMX^1_2 \qquad (III)$$

$$(CpYMX^1_n)_2X^2_{2-n} \qquad (IV),$$

wherein respective M, Cp, $X^1$ and $X^2$ is the same as defined in the general formula (I)or (II) above; Y is a group having an atom of the Group XV or XVI of the Periodic Table of the Elements and σ-bonding to M through the atom in the group; Cp and $X^1$ may be bonded to each other directly or through a bridging group; n is 0 or 1; and a plurality of respective Cp, M, $X^1$ and $X^2$ may be the same or different.

**8.** The olefin polymerization catalyst according to claim 1, wherein (A) is a transition metal compound selected from transition compounds represented by the general formulas (I), (II) or (III);

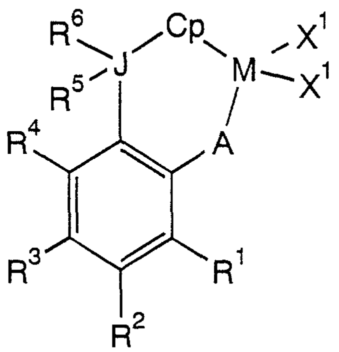

(I)

,

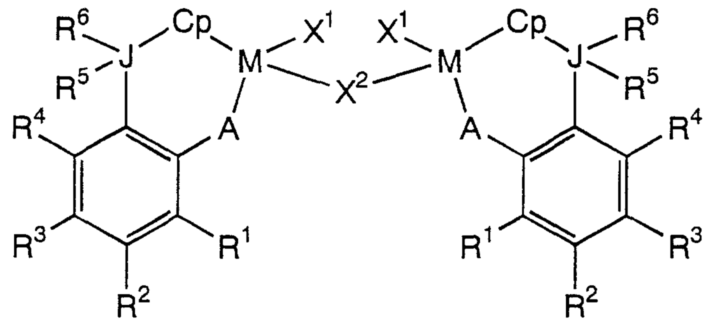

(II)

,

or

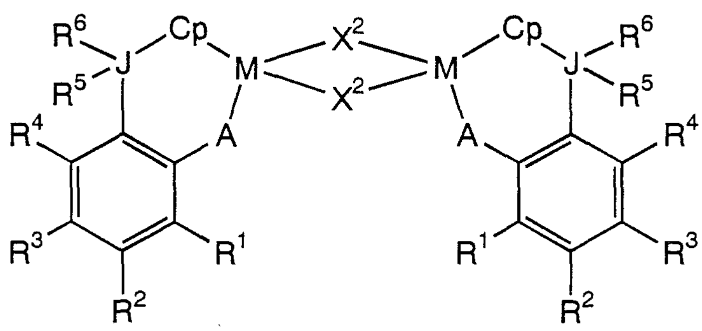

(III)

,

wherein, in the general formula (I), (II] or (III], M represents a transition metal atom of the Group IV of the Periodic Table of the Elements; A represents an atom of the Group XVI of the Periodic Table of the Elements; J represents an atom of the Group XIV of the Periodic Table of the Elements ; Cp represents a group having a cyclopentadiene type anion skeleton; each of $X^1$, $R^1$, $R^2$, $R^3$, $R^4$, $R^5$ and $R^6$ independently represents a hydrogen atom, a halogen atom, an alkyl group, an aralkyl group, an aryl group, a substituted silyl group, an alkoxy group, an aralkyloxy group, an aryloxy group, a di-substituted amino group, an alkylthio group, an aralkylthio group, an arylthio group, an alkylseleno group, an aralkylseleno group or arylseleno group; $X^2$ represents an atom of Group XVI of the Periodic Table of the Elements; $R^1$, $R^2$, $R^3$, $R^4$, $R^5$ and $R^6$ may be optionally combined with each other to form a ring; and in the general formula (II) or (III), two of M, A, J, Cp, $X^1$, $X^2$, $X^3$, $R^1$, $R^2$, $R^3$, $R^4$, $R^5$ and $R^6$ may be respectively the same or different.

**9.** The olefin polymerization catalyst according to claim 1, wherein (B) is an organoaluminum compound selected from triethylaluminum, triisobutylaluminum, methylaluminoxane, methylisobutylaluminoxane and butylaluminoxane.

**10.** A process for producing an olefin polymer which comprises polymerizing an olefin with the olefin polymerization catalyst of any one of claims 1 to 9.

**11.** The process for producing an olefin polymer according to claim 10, wherein the olefin polymer is a copolymer of ethylene and an α-olefin having 3 to 20 carbon atoms.

**12.** The process for producing an olefin polymer according to claim 10 or 11, the polymerization temperature is 150 to 300°C.

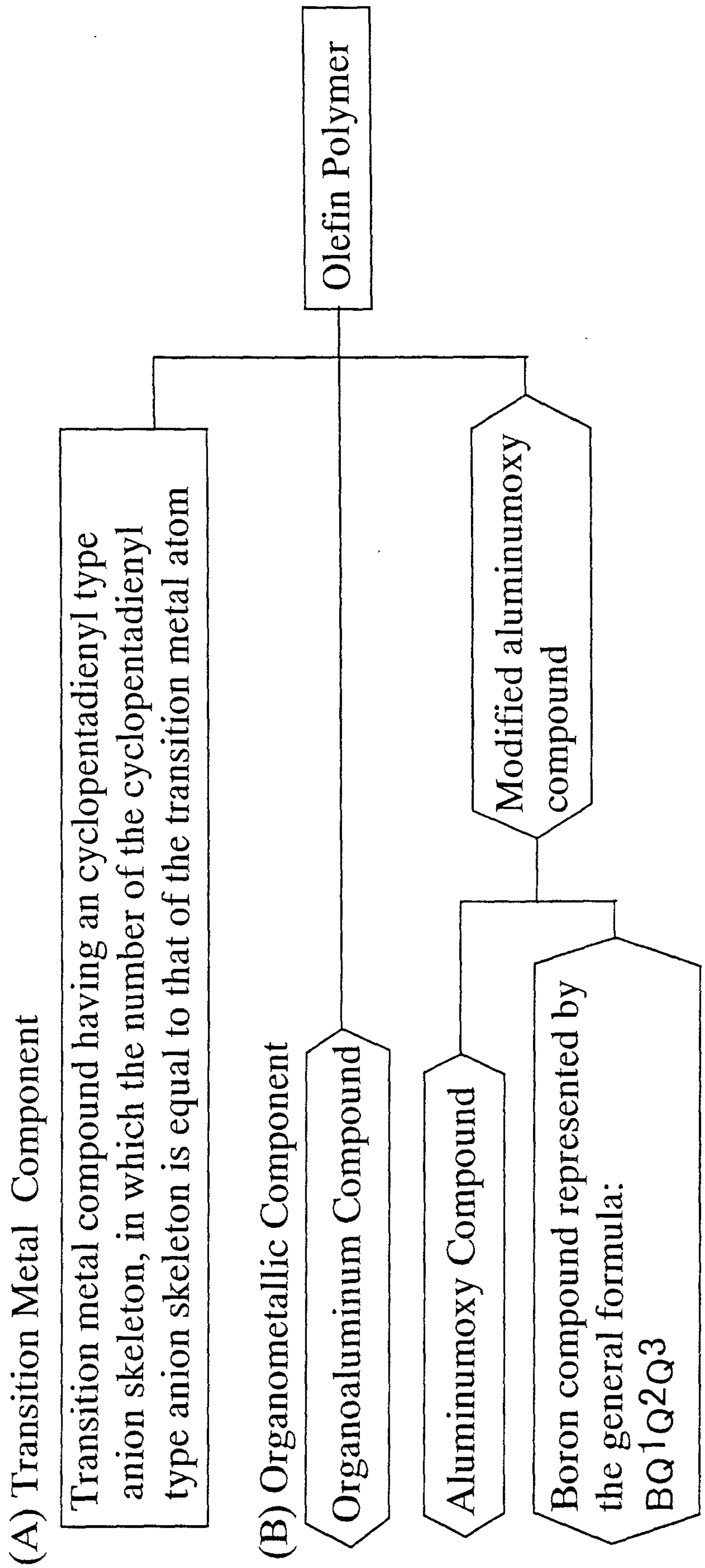
Olefin Polymer
(A) Transition Metal Component
Transition metal compound having an cyclopentadienyl type anion skeleton, in which the number of the cyclopentadienyl type anion skeleton is equal to that of the transition metal atom
(B) Organometallic Component
Organoaluminum Compound
Modified aluminumoxy compound
Aluminumoxy Compound
Boron compound represented by the general formula: BQ1Q2Q3

Fig. 1

European Patent Office

# EUROPEAN SEARCH REPORT

Application Number
EP 01 10 5363

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>Y<br><br><br><br>X<br>X<br>X | WO 00 09515 A (DOW CHEMICAL CO)<br>24 February 2000 (2000-02-24)<br>* examples 1-4,6-9 *<br>* page 26 *<br>* examples 7-14; table 1 *<br>* claims 2,6,7,11 *<br>* page 15, line 7 - line 30 *<br>* page 15, line 33 - page 16, line 1 *<br>* page 18, line 23 - line 25 *<br>--- | 1-3,10,<br>11<br>4,8,9<br><br><br><br>5<br>6,7<br>12 | C08F4/646<br>C08F10/00 |
| X | WO 00 00523 A (DOW CHEMICAL CO ;NEWMAN THOMAS H (US); BORODYCHUK KAREN K (US))<br>6 January 2000 (2000-01-06)<br>* examples 1-4 *<br>--- | 1-3,5,9,<br>10 | |
| D,Y | LEE ET AL: "preparation of al(c6f5)3 and its use for the modification of methylalumoxane"<br>JOURNAL OF MOLECULAR CATALYSIS. A, CHEMICAL,ELSEVIER, AMSTERDAM,NL,<br>vol. 132, 1998, pages 231-239, XP002114206<br>ISSN: 1381-1169<br>* page 233, paragraph 2.5 *<br>* page 236, paragraph 3.4 - page 237, paragraph 3.5 *<br>--- | 4 | TECHNICAL FIELDS SEARCHED (Int.Cl.7)<br>C08F |
| Y<br><br><br><br><br>D,Y | EP 0 842 939 A (SUMITOMO CHEMICAL CO)<br>20 May 1998 (1998-05-20)<br>* example 84 *<br>* claim 22 *<br>* page 27, line 21 - line 24 *<br>& JP 09 087313 A<br>31 March 1997 (1997-03-31)<br>----- | 8,9 | |

The present search report has been drawn up for all claims

| Place of search | Date of completion of the search | Examiner |
|---|---|---|
| THE HAGUE | 19 July 2001 | Fischer, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 10 5363

This annex lists the patent family membersrelating to the patent documents cited in the above-mentioned European search report.
The members are as contained in the European Patent Office EDP file on
The European Patent Office is in no way liable for these particulars which are merely given for the purpose of information.

19-07-2001

| Patent document cited in search report | Publication date | Patent family member(s) | Publication date |
|---|---|---|---|
| WO 0009515 A | 24-02-2000 | AU 4440499 A | 06-03-2000 |
| | | AU 4564799 A | 06-03-2000 |
| | | AU 4564899 A | 06-03-2000 |
| | | EP 1104429 A | 06-06-2001 |
| | | EP 1104426 A | 06-06-2001 |
| | | EP 1104430 A | 06-06-2001 |
| | | WO 0009523 A | 24-02-2000 |
| | | WO 0009524 A | 24-02-2000 |
| | | US 6140521 A | 31-10-2000 |
| | | US 6214760 B | 10-04-2001 |
| | | US 6162935 A | 19-12-2000 |
| WO 0000523 A | 06-01-2000 | EP 1093476 A | 25-04-2001 |
| EP 0842939 A | 20-05-1998 | CN 1193323 A | 16-09-1998 |
| | | WO 9703992 A | 06-02-1997 |
| | | JP 9087313 A | 31-03-1997 |

EPO FORM P0459

For more details about this annex : see Official Journal of the European Patent Office, No. 12/82